# FASCICULE DE BREVET EUROPEEN

(11) **EP 4 025 802 B1**
(45) Date de publication et mention de la délivrance du brevet: **01.05.2024**
(21) Numéro de dépôt: 20765011.0
(22) Date de dépôt: 02.09.2020
(51) Int. Cl.: F16D 65/10, B22D 19/00

(54) **COURONNE DE FRICTION POUR UN TAMBOUR DE FREIN COMPOSITE, MÉTHODE ET SYSTÈME POUR SA FABRICATION, ET MÉTHODE DE FABRICATION D'UN TAMBOUR DE FREIN COMPOSITE**
REIBRING FÜR EINE VERBUNDBREMSTROMMEL, VERFAHREN UND SYSTEM ZUR HERSTELLUNG DESSELBEN UND VERFAHREN ZUR HERSTELLUNG EINER VERBUNDBREMSTROMMEL
FRICTION RING FOR A COMPOSITE BRAKE DRUM, METHOD AND SYSTEM FOR MANUFACTURING THE SAME, AND METHOD FOR MANUFACTURING A COMPOSITE BRAKE DRUM

(30) Priorité: 02.09.2019 FR 1909637
(43) Date de publication de la demande: 13.07.2022
(73) Titulaire: Bronze Alu, 27750 La Couture-Boussey (FR)
(72) Inventeur: DOREMUS, Eric, 80310 BELLOY SUR SOMME (FR)
(74) Mandataire: Regimbeau
(86) Numéro de dépôt international: PCT/EP2020/074486
(87) Numéro de publication internationale: WO 2021/043836

(56) Documents cités:
- EP-A1- 2 363 523
- WO-A1-2014/203969

## Description

### DOMAINE DE L'INVENTION

La présente invention concerne un tambour de frein, en particulier un tambour de frein composite, par exemple pour véhicule automobile.

Plus précisément, l'invention concerne une couronne de frottement pour tambour de frein, un procédé et un système de fabrication d'une couronne de frottement pour tambour de frein, ainsi qu'un tambour de frein composite, un procédé et un système de fabrication d'un tambour de frein composite, par exemple par surmoulage en fonderie d'alliage d'aluminium d'une couronne de frottement.

### ETAT DE LA TECHNIQUE

Les tambours de frein équipent principalement les véhicules automobiles de faible puissance ou d'entrée de gamme. Ces tambours de frein, au nombre de deux, sont disposés en général sur le train arrière du véhicule automobile. Les roues avant sont principalement munies de freins à disque, le disque ayant la même fonction de dissipation énergétique au freinage que le tambour de frein.

Dans un tambour de frein, un corps principal est monté coaxial avec un axe qui est lui-même coaxial à la roue. Le tambour de frein est donc indirectement solidaire de la jante de la roue et tourne à la même vitesse de rotation.

Un organe de freinage, tel que des patins de frottement d'un dispositif de freinage coopèrent avec le tambour de frein. Ces patins de frottement, en se rapprochant de la surface interne cylindrique du tambour de frein, viennent en contact avec ladite surface interne, lors d'une manoeuvre de freinage décidée par le conducteur du véhicule automobile. Lorsque le conducteur appuie sur la pédale de freinage, ces patins de frottement exercent une pression de contact sur la surface interne du tambour de frein, plus ou moins importante, selon l'intensité du freinage. Le frottement provoqué par le mouvement relatif du tambour en rotation, lorsque le véhicule se déplace, par rapport aux patins de frottement, fixes, permet de transformer l'énergie cinétique du véhicule en mouvement en énergie calorifique, permettant ainsi au véhicule de ralentir voire de stopper, selon la décision du conducteur. Le frottement plus ou moins intensif, qui dépend de plusieurs conditions, comme la vitesse de rotation de la roue, la pression de contact entre les patins de frottement et la surface interne du tambour de frein, les conditions tribologiques de l'interface de frottement, génère des quantités de chaleur plus ou moins importantes. Dans certaines conditions de freinage intensif, la chaleur générée peut surchauffer le tambour de frein jusqu'à des températures supérieures à 400°C, ayant pour conséquence de dégrader rapidement et de façon significative l'efficacité du freinage. C'est ce que l'on appelle l'effet de « fading » dans la terminologie anglo-saxonne. Ceci peut conduire à la perte de capacité de freinage des tambours de frein. D'autre part, les accroissements de température excessifs dans l'environnement du dispositif de freinage, notamment à l'intérieur du tambour de frein, peuvent porter préjudice au dispositif hydraulique permettant d'actionner les patins de frottement (ou les étriers et plaquettes de frein dans le cas d'un dispositif de freinage à disque). En effet, il y a dans certains cas un risque de vaporisation dudit liquide hydraulique. De tels inconvénients ont par exemple été décrits dans le document *«* Analysis of heat conduction in a disk brake system », F. Talati & S. Jalalifar, Heat Mass Transfer, 2009, 45:1047-1059.

Dans un autre exemple de conception pour le montage du tambour de frein et de la jante de roue, un composant muni d'un axe est rendu solidaire d'un élément de châssis. Le composant reçoit un sous-ensemble de freinage à l'aide de vis de fixation. Le sous-ensemble de freinage comprend les patins de frottement dont le mouvement de mise en contact avec la surface interne du tambour de frein est actionné à l'aide d'un vérin faisant partie du sous-ensemble de freinage. Un moyeu est monté à rotation autour de l'axe, grâce à un roulement intermédiaire. Ce moyeu reçoit le tambour de frein et la jante de roue.

Les tambours de frein sont en général réalisés à partir d'une pièce de fonderie en fonte, en forme de couvercle.

Dans un exemple de conception, la surface de frottement interne cylindrique réalisée par usinage du tambour de frein, et qui coopère par contact glissant avec les patins de frottement du dispositif de freinage, présente un diamètre intérieur de 228,6 millimètres et une largeur de 52 millimètres. La surface extérieure du tambour de frein est, elle aussi, sensiblement cylindrique. Avantageusement, des nervures sont aménagées dans la conception de certains tambours de frein pour des raisons de rigidité optimisée en termes de poids du tambour et aussi pour des raisons d'optimisation de dissipation de chaleur générée lors du freinage, en augmentant la surface d'échange thermique avec l'environnement (fonction d'ailettes de refroidissement).

Les tambours en fonte, généralement en fonte lamellaire (fonte GJL 200), ont l'inconvénient d'être lourd, opposant un fort moment d'inertie à la rotation de la roue. De plus, la fonte dissipe plus ou moins facilement la chaleur générée lors des freinages intensifs. D'autre part, cette chaleur a tendance à rester concentrer au voisinage de la surface de frottement cylindrique du tambour de frein, compte tenu du coefficient d'échange thermique de la fonte (en W.m⁻¹.°C⁻¹).

De nombreux documents décrivent des procédés de conception de tambours de frein.

Dans US 1,553,670, il est proposé une conception en deux parties. La première partie est une couronne dont le diamètre intérieur usiné fournit la fonction de surface de frottement, la surface extérieure est munie d'une pluralité de gorges permettant l'obtention de nervures en périphérie, augmentant ainsi la surface d'échange thermique avec l'environnement. Cette couronne en acier moulé (fonte ou autre matériau ferreux) est connectée à un flasque permettant la fixation du tambour de frein ainsi formé. Ce flasque peut être soudé à la couronne, ou assemblé à l'aide de rivets. Cette conception permet de réduire le poids du tambour de frein.

Dans US 2,840,195, il est proposé un tambour de frein comprenant : une couronne en fonte dont la surface est percée d'une multitude de trous débouchant et d'un flasque latéral en tôle métallique. Un alliage d'aluminium est surmoulé autour de la couronne et de la périphérie extérieur du flasque formé d'un rebord embouti. Le surmoulage réalisé par une opération de fonderie (comme par exemple en coulée par centrifugation) permet de cramponner les trois éléments que sont la couronne, le flasque et la forme surmoulée extérieure en alliage d'aluminium. L'alliage d'aluminium remplit les trous aménagés dans la couronne. Cette conception composite présente certains avantages comme un gain de poids, une évacuation plus rapide de la chaleur générée lors de freinages intensifs, grâce à l'alliage d'aluminium en contact avec la couronne en fonte dont le diamètre intérieur usiné forme la surface de frottement cylindrique du tambour de frein.

Dans US 1,670,320, il est proposé un tambour de frein dont la couronne de frottement est percée d'une pluralité de trous débouchant. D'après ce document, ces trous permettent d'améliorer l'échange thermique, l'évacuation des calories, et de limiter les échauffements excessifs du tambour de frein lors de freinages intensifs.

Dans EP 0 002 581, il est proposé une conception de tambour de frein composite comparable à l'invention définie dans US 2,840,195 mais la couronne de frottement n'est pas percée d'une pluralité de trous débouchant. Ce document indique que le flasque permettant de fixer le tambour de frein peut recevoir des masses d'équilibrage.

Dans US 2,115,980, il est proposé une conception de tambour de frein composite comprenant un flasque en tôle métallique aménagé de manière à pouvoir couler en fonderie par centrifugation la couronne de frottement et maintenir en position ladite couronne de frottement à l'intérieur du flasque, grâce à une ou plusieurs formes en « V » s'étendant radialement vers l'extérieur. Le tambour peut également comprendre un flasque en tôle fixé sur le flasque comprenant la couronne de frottement. D'après ce document, ceci permet d'augmenter la durée de vie du tambour de frein.

Dans GB 560,903, il est proposé une conception de tambour de frein pour l'aviation caractérisé par un corps réalisé en alliage léger, ce corps étant réalisé par surmoulage en fonderie autour d'une pluralité de segments positionnés avec précision dans l'outillage de surmoulage et formant la surface de frottement, après usinage de l'alésage de frottement. Ces segments sont réalisés dans un matériau résistant à l'usure provoquée par les patins de frottement du dispositif de freinage. Cette technologie est proposée pour résoudre les risques de glissement relatifs entre la couronne de frottement et le corps de tambour en alliage léger surmoulé autour de la couronne. Ce problème, indique ce document, est principalement dû à la différence de coefficient de dilatation entre l'alliage léger (par exemple un alliage d'aluminium) et le matériau (par exemple de la fonte ou de l'acier) constitutif de la couronne de frottement.

Dans US 2,109,110, il est proposé un tambour de frein composite comprenant un corps en alliage d'aluminium dont la périphérie extérieure possède une pluralité de nervures formant saillie et permettant d'augmenter la surface d'échange thermique avec l'environnement. Ce corps en forme de couvercle entoure une jante mince en tôle d'acier dont le diamètre intérieur sert de surface de frottement pour le mécanisme de freinage. Entre cette jante mince en tôle d'acier et le corps en alliage léger, ce document décrit la présence d'une couche de zinc déposée sur la surface extérieure du flasque en tôle mince. Les objectifs recherchés sont un gain de poids, un meilleur transfert de chaleur vers l'environnement afin de refroidir rapidement le tambour de frein. Le corps en alliage léger est surmoulé par procédé de fonderie autour du flasque revêtu d'une couche de zinc.

Dans US 2,563,769, il est proposé une solution pour les tambours de frein d'avions qui doivent supporter, lors d'un atterrissage, une quantité de chaleur très importante, compte tenu de l'intensité de freinage excessive de manière à stopper le plus rapidement possible l'avion sur la piste d'atterrissage, et par conséquent être capable d'évacuer ces calories le plus rapidement possible. Ainsi, ce document divulgue un tambour de frein comprenant un flasque comprenant une périphérie cylindrique et un flanc latéral destiné à la fixation du tambour de frein, une couronne de frottement en fonte coulée par centrifugation à l'intérieur du flasque, une pluralité d'ailettes de refroidissement situées en périphérie extérieure du flasque, ces ailettes étant surmoulées lors de la coulée par centrifugation de la couronne de frottement.

Dans US 1,998,709, il est proposé un dispositif de coulée par centrifugation du matériau constitutif de la couronne de frottement et les tambours de frein composites réalisés avec ledit procédé.

Le surmoulage, par procédé de fonderie, d'un alliage d'aluminium sur un corps constitué d'un matériau métallique dont le point de fusion est beaucoup plus élevé que celui de l'alliage d'aluminium a, par ailleurs, fait l'objet de nombreux travaux.

Dans US 2,543,936, il est proposé un dispositif permettant de réaliser un tel surmoulage.

Dans US 2,506,823, il est proposé un tambour de frein pour véhicule automobile caractérisé par un flasque en forme de couvercle, lequel comprend une périphérie cylindrique et un voile permettant la fixation du tambour de frein, et dans lequel est coulé un matériau métallique constitutif de la couronne de frottement. Un ruban en forme d'ailette continue et spiralée est surmoulé lors de la coulée du matériau métallique, en fonderie par centrifugation. La base du ruban traverse la périphérie sensiblement cylindrique du flasque pour se retrouver emprisonnée dans le matériau métallique constitutif de la couronne de frottement. Le matériau constitutif du ruban métallique est caractérisé par une grande conductivité thermique. Ceci permet, selon ce document, un meilleur refroidissement du tambour de frein, en partie grâce au ruban en forme d'ailette continue qui augmente la surface d'échange thermique avec l'environnement.

Dans US 2,046,369, il est proposé un procédé de fabrication d'un corps de tambour de frein, réalisé en fonderie centrifugée. Dans le procédé divulgué, deux matériaux métalliques sont introduits dans le moule : la fonte et du cuivre ou alliage au cuivre. Etant donné que la densité du cuivre est plus élevée que celle de la fonte, et que les températures de fusion sont relativement proches, il est décrit que, sous l'effet des forces centrifuges, le cuivre a tendance à migrer plus facilement vers les parois intérieures de l'élément moulant, alors que la fonte se retrouve plus facilement vers l'intérieur radialement. Ainsi, une fois solidifiée, le tambour de frein dispose d'une couronne de frottement dont l'épaisseur, en partant de la surface intérieure, est plutôt composée de fonte, favorable pour la surface de frottement après usinage, alors que sa périphérie est riche en cuivre, ce qui améliore la résistance mécanique du tambour de frein. Avantageusement, un flasque en tôle métallique est lié au corps du tambour de frein bi-matière, ce flasque permettant de fixer le tambour de frein optimisé en termes de poids.

Dans GB 473,138, il est proposé un tambour de frein caractérisé par la présence d'un flasque en tôle d'acier surmoulé lors de la coulée de la couronne de frottement en fonte. Le flasque en tôle est aménagé de manière à garantir la bonne tenue mécanique de cette liaison surmoulée. L'objectif est un gain de poids.

Dans KR 2010/0039662, il est question d'une couronne en fonte ou tout matériau adapté pour coopérer avec les patins de frottement, se terminant latéralement par une forme adaptée pour la fixation du tambour de frein, cette couronne possédant sur sa périphérie extérieure des excroissances annulaires. Un second matériau est surmoulé en fonderie autour de ladite couronne, de manière à fournir de la rigidité sur l'un des bords du tambours d'une part, d'autre part de manière à intégrer des ailettes de refroidissement lors du surmoulage en fonderie.

Dans JP2004084889, il est proposé un moyeu de roue de motocyclette intégrant une fonction de tambour de frein. Ce tambour intègre une couronne de frottement surmoulée et caractérisée par une surface extérieure striée, ce qui permet d'augmenter la surface d'échange thermique entre cette couronne soumise aux sollicitations de frottement lors de freinages et le corps de tambour qui doit le plus rapidement possible dissiper la chaleur provoquée par le freinage.

Dans FR 2 830 914, il est proposé un tambour de frein composite comportant au moins une piste de freinage (surface de frottement) et un dissipateur thermique, caractérisé en ce que la piste de freinage est portée directement par un moyeu de roue, par l'intermédiaire d'une paroi de maintien, afin de former un ensemble monobloc, ledit ensemble étant recouvert à sa périphérie par un dissipateur thermique comportant avantageusement des ailettes de renfort et de dissipation de chaleur.

Dans WO 2012/052647, il est proposé un tambour de frein composite comprenant une couronne axiale circulaire réalisée par emboutissage d'une tôle d'acier, cette couronne cylindrique comportant un diamètre intérieur servant de surface de frottement pour la fonction de freinage, ladite couronne se terminant par une forme radiale permettant la fixation du tambour de frein, d'un anneau cylindrique en tôle d'acier recouvrant, par le biais d'une opération d'assemblage par emmanchement serrant, partiellement ou totalement la périphérie cylindrique de la couronne. Cet anneau comporte une pluralité de trous débouchant. Une forme externe en alliage léger (par exemple en alliage d'aluminium) est ensuite surmoulée par un procédé de fonderie autour de l'anneau et de la couronne. Lors du surmoulage, l'alliage léger vient remplir les trous aménagés sur l'anneau. Ces trous peuvent être orienté angulairement de manière à améliorer le maintien du contact entre les surfaces emmanchées de la couronne et de l'anneau lorsque le tambour de frein est soumis aux phénomènes de dilatation provoqués par les échauffements lors des sollicitations de freinage du véhicule automobile. Les objectifs recherchés sont un allègement du tambour de frein et une meilleure dissipation thermique de la chaleur accumulée.

L'état de la technique montre que la technologie de freinage à l'aide de tambour de frein a fait l'objet de nombreux travaux et d'études visant à améliorer la dissipation de chaleur qu'accumule un tambour de frein lorsqu'il est sollicité de façon intensive, mais aussi à réduire le poids dudit tambour de frein qui est en général réalisé en fonte par procédés de fonderie et d'usinage, pour des raisons de coûts de fabrication faibles.

La technologie de freinage à l'aide de tambour de frein est également moins coûteuse que celle associée aux disques de frein.

Les disques de freinage se sont cependant généralisés depuis plusieurs années sur les véhicules automobiles notamment pour des raisons de performances de freinage. En effet, la technologie de freinage à tambours est, à priori, moins performante que celle à disques pour plusieurs raisons. D'une part, le diamètre de la surface de frottement des tambours de frein est limité par les dimensions des roues de véhicules automobile, ce qui limite le couple de freinage du véhicule muni de tambours de frein. D'autre part, la masse et le moment d'inertie polaire d'un tambour de frein, particulièrement lorsqu'ils sont en fonte, sont relativement élevés, compte tenu de la répartition des masses constitutives du tambour de frein, puisque ces masses se concentrant principalement radialement sur la périphérie. A titre d'exemple, la masse d'un tambour de frein en fonte se situe autour de 5 à 6 kg pour un véhicule automobile de faible puissance.

Les constructeurs de véhicules automobiles sont, par ailleurs, soumis à des contraintes de plus en plus sévères en termes d'émissions de gaz à effet de serre. Ces réglementations obligent les constructeurs de véhicules automobiles à développer des solutions techniques permettant de réduire les masses roulantes, tout en réduisant les coûts de fabrication des véhicules. A ceci s'ajoute les réglementations concernent les rejets de microparticules, comme les poussières générées par l'usure des pistes de frottement des organes de freinage. A cet égard, le tambour de frein présente l'avantage de pouvoir confiner plus ou moins efficacement ces poussières à l'intérieur du tambour de frein, à l'inverse du freinage à disques, où ces poussières sont libérées dans l'environnement.

La technologie des tambours de frein présente par conséquent certains avantages (e.g. confinement des poussières générées par le frottement, coût de la fonction de freinage). Il convient par conséquent d'en améliorer la conception afin de les rendre plus performants et plus légers.

A cet égard, des tambours de frein dits « composites » ont été développés. Cette technologie est basée sur un tambour de frein comprenant une couronne de frottement en fonte faisant insert dans une pièce moulée en fonderie d'alliage d'aluminium. Différentes variantes ont été testées sur banc de freinage pour mesurer la vitesse de refroidissement du tambour de frein après une séquence de freinages. La géométrie de la partie en alliage d'aluminium surmoulée autour de la couronne de frottement a une influence sur la vitesse de refroidissement du tambour de frein.

Dans une variante avantageuse de tambours de frein composites, une forme est surmoulée autour d'une couronne de frottement en fonte, cette forme se prolongeant par un voile de fonderie d'alliage d'aluminium s'étendant radialement pour permettre la fixation du tambour sur le moyeu de roue. La géométrie et le nombre des ailettes réalisées lors du moulage a également une influence.

Ainsi, dans l'état de la technique, des solutions ont été proposées pour résoudre les problèmes suivants :
augmenter la vitesse de refroidissement du tambour de frein,
réduire le poids du tambour de frein,
augmenter les performances de freinage d'un tambour de frein,
réduire l'échauffement de la couronne de frottement après des sollicitations de freinage intense
augmenter la robustesse et la durée de vie du tambour de frein,
diminuer la dégradation de conduction thermique entre une couronne de frottement généralement en fonte et un composant en contact avec la surface extérieure de la couronne de frottement, prenant souvent la forme d'un élément en alliage léger surmoulé autour de ladite couronne, élément permettant d'augmenter la dissipation thermique de la chaleur accumulée dans la couronne de frottement après sollicitations de freinage du tambour, et
améliorer la tenue mécanique de la couronne de frottement en fonte ou en acier servant d'insert lors du surmoulage en fonderie d'un alliage léger (par exemple un alliage d'aluminium) autour de ladite couronne de frottement, soumise à des couples de freinage pouvant entrainer un glissement relatif entre ladite couronne et son support en alliage léger.

Pour répondre aux risques de glissement relatifs d'une couronne de frottement soumises aux couples de freinage et aux échauffements générés par le frottement des patins du mécanisme de freinage, la couronne de frottement en fonte peut être réalisée en fonderie centrifugée selon un procédé décrit dans le document EP 2 497 967.

Suite à la mise en oeuvre du procédé décrit dans ce document, la couronne de frottement (en acier, en alliage d'aluminium ou de préférence en fonte) possède sur la périphérie extérieure une pluralité de petites excroissances, venues de fonderie par réaction avec la surface du moule de fonderie, ces excroissances, appelées « spiny » dans la terminologie anglo-saxonne, prenant la forme de champignons dont le profil peut présenter des formes en contre-dépouille. Les excroissances décrites dans EP 2 497 967 augmentent l'emprise entre la surface extérieure de la couronne de frottement et le corps principal en alliage d'aluminium surmoulé autour de la couronne. Ainsi, les risques de glissement relatif de la couronne de frottement, soumise aux couples de freinage, sont à priori annulés. D'autre part, ces excroissances augmentent de façon significative la surface d'échange thermique par conduction entre la couronne de frottement et le corps principal du tambour de frein. Le flux thermique est donc amélioré pour faciliter le refroidissement du tambour de frein.

La couronne de frottement décrite dans EP 2 497 967 peut être utilisée comme insert dans la fabrication d'un tambour de frein par surmoulage d'un alliage d'aluminium autour de ladite couronne de frottement. Certaines opérations d'usinage complémentaires à l'opération de surmoulage permettent en outre l'obtention des tolérances requises pour le diamètre intérieur de la surface interne de la couronne, ainsi que l'obtention d'autres dimensions à tolérances restreintes.

Des essais sur banc de freinage ont été réalisés pour tester le comportement du tambour de frein décrit dans EP 2 497 967. Ces essais ont montré un échauffement excessif (au-delà de 300°C) pour des tambours de frein en fonte, lorsque les sollicitations de freinage appliquées au tambour génèrent une quantité de chaleur que le tambour en fonte ne parvient plus à évacuer rapidement, tandis que le tambour composite fabriqué comme décrit dans EP 2 497 967, parvient à maintenir une température maximale autour de 50°C, grâce au pouvoir de dissipation thermique du corps principal surmoulé en alliage d'aluminium.

Un tambour composite présentant un poids d'environ 3,5 kg, a été fabriqué avec des couronnes de frottement en fonte (nuance GJL200) possédant les excroissances telles que décrites dans EP 2 497 967. Ces excroissances assurent un bon maintien de la couronne lorsque le tambour de frein est fortement sollicité. Les risques de désolidarisation de ladite couronne de frottement sont écartés. D'autre part, les nombreuses excroissances permettent d'augmenter la surface d'échange du flux de chaleur, par conduction thermique, entre la couronne de frottement soumises aux frottements intensifs et la masse d'alliage d'aluminium qui joue le rôle de dissipateur thermique efficace.

Toutefois, d'un point de vue économique, le coût de fabrication de la couronne de frottement en fonte selon EP 2 497 967 n'est pas optimal.

D'autres procédés de fabrication ont été proposés à cet égard.

Dans FR 1 247 477, il est proposé de réaliser la couronne de friction en fonte, par coulée centrifuge. Des excroissances sont également obtenues grâce au dépôt sur la surface du moule, d'un produit qui en séchant, génère des irrégularités et des poches d'air, lesquelles sont remplacées par la fonte coulée par centrifugation dans ledit moule. Des petites excroissances et irrégularités de surface formant saillies et creux, lesquelles reçoivent l'alliage d'aluminium lors de la réalisation du corps principal du tambour, sont ainsi obtenues. Ceci crée une forte emprise entre les deux matériaux. Ce procédé de fabrication est néanmoins coûteux. De plus, il est nécessaire de prévoir une étape additionnelle lors de laquelle la surface intérieure de la couronne est usinée avant surmoulage de l'alliage d'aluminium

Dans EP 1 292 781, des excroissances prenant la forme de rainure sont réalisées en moulage fonderie puis extrusion. Ces rainures bloquent le corps principal par rapport à la couronne de frottement dans la seule direction de rotation circonférentielle. Toutefois, ce procédé demeure coûteux et le corps principal peut glisser axialement par rapport à la couronne de frottement.

Dans US 4,436,139, il est proposé un moule permettant de réaliser un tambour composite comprenant une couronne de friction de faible épaisseur mais généralement ovalisée. Le moule comprend des éléments élastiques permettant de positionner de façon coaxiale la couronne mince et de compenser ses défauts d'ovalisation, mais aussi permettant d'éviter des opérations d'usinage de finition (e.g. alésage couronne) tout en limitant le balourd du tambour ainsi fabriqué. Ce document décrit que la couronne de frottement comprend avantageusement une surface extérieure rugueuse sans pour autant décrite mode de fabrication de cette surface rugueuse d'accroche.

Dans US 3,112,541, il est proposé une couronne de frottement munie d'excroissances réalisées en fonderie sable. Des petites billes de polystyrène sont floquées sur la surface huilée d'un modèle de couronne utilisé pour imprimer une contre-forme dans un moule sable. Lors de la coulée du métal dans le moule sable, les petites billes de polystyrène sont remplacées par du métal solidifié, permettant de former des excroissances sur la surface extérieure de la couronne de friction. Toutefois, ce procédé de fabrication est coûteux car la couronne de frottement est réalisée par fonderie. En outre, ce procédé de fabrication nécessite l'usinage de l'alésage de la couronne de frottement pour son centrage dans le moule de surmoulage du corps principal de tambour de frein.

Dans GB 873,012, il est proposé une couronne de frottement en alliage ferreux ou cupro-ferreux, réalisée par procédé de fonderie centrifuge. Un produit est déposé sur la surface du moule permettant l'obtention d'une surface rugueuse formée de petites excroissances parfois en forme de champignons, comme dans FR 1 247 477. De même, ce procédé demeure coûteux car la couronne de frottement est réalisée par procédé de fonderie, et il est nécessaire de prévoir l'usinage de l'alésage de la couronne de frottement pour son centrage dans le moule de surmoulage du corps principale de tambour de frein.

Dans JPH 05187466, il est proposé un procédé équivalent à celui de EP 1 292 781.

Dans JPH 11336803, il est proposé une couronne de frottement avec des cannelures sur la paroi extérieure dont le coût de fabrication demeure néanmoins élevé.

Dans US 3,888,296 il est proposé de braser des petits copeaux métalliques sur la paroi extérieure de la couronne de frottement, ce qui implique un coût important de fabrication.

Dans US 4,023,613, des saillies par indentations successives sont réalisées, pas à pas, sur une tôle plane, à l'aide d'un couteau orienté. Puis cette pièce munie de saillies est mise en forme avant d'être introduite dans un moule de surmoulage. Le coût de fabrication d'un tel procédé reste élevé.

Il existe donc un besoin de pallier au moins un inconvénient de l'état de la technique précédemment décrit.

### EXPOSE DE L'INVENTION

Un but de l'invention est de réduire le coût de fabrication d'un tambour de frein composite.

Il est à cet effet proposé, selon un premier aspect de l'invention, une couronne de frottement pour tambour de frein, de préférence pour tambour de frein composite dans lequel la couronne de frottement forme un insert de surmoulage par procédé de fonderie d'un métal, par exemple un alliage d'aluminium, la couronne de frottement :
présentant un axe de symétrie, et
comprenant une bande de tôle métallique, de préférence une bande de tôle d'acier, ladite bande :
   présentant une forme annulaire autour de l'axe de symétrie, la forme annulaire ayant été formée par roulage de la bande, et
   comprenant au moins une protubérance ayant été formée par poinçonnage de la bande.

Avantageusement, mais facultativement, la couronne de frottement selon l'invention peut comprendre l'une parmi l'une des caractéristiques suivantes, prise seule ou en combinaison : la couronne de frottement présente :
une surface interne configurée pour coopérer par frottement avec un organe de freinage, et
une surface externe, opposée à la surface interne et destinée à recevoir un corps principal surmoulé,
la protubérance fait saillie de la surface externe de la bande,
une empreinte en creux est formée dans la surface interne de la bande, au niveau de la protubérance, l'empreinte présentant une forme complémentaire de la protubérance,
la protubérance présente une portion évasée, par exemple un sommet évasé,
la bande présente une première extrémité et une deuxième extrémité, opposé à la première extrémité, la première extrémité et la deuxième extrémité étant adjacentes bord à bord,
la première extrémité et la deuxième extrémité sont soudées entre elles,
la couronne de frottement comprend une pluralité de protubérance réparties circonférentiellement autour de l'axe de symétrie, et
la bande présente :
   un diamètre intérieur par rapport à l'axe de symétrie qui est compris entre 100 et 500 millimètres, de préférence compris entre 200 et 300 millimètres,
   une épaisseur prise dans un plan orthogonal à l'axe de symétrie qui est comprise entre 2 et 8 millimètres, de préférence comprise entre 4 et 7 millimètres, et
   une largeur prise dans une direction parallèle à l'axe de symétrie qui est comprise entre 25 et 75 millimètres, de préférence comprise entre 40 et 60 millimètres.

Selon un deuxième aspect, l'invention propose un tambour de frein composite comprenant :
une couronne de frottement telle que précédemment décrite, et
un corps principal :
   surmoulé autour de la couronne de frottement de sorte à noyer la protubérance de la bande afin de prévenir un mouvement relatif de la couronne de frottement par rapport au corps principal,
   centré autour de l'axe de symétrie, et
   comprenant un métal, par exemple un alliage métallique, de préférence un alliage d'aluminium,
   le corps principal présentant en outre :
      une surface interne en contact avec la couronne de frottement, et
      une surface externe, opposée à la surface interne.

Avantageusement, mais facultativement, le tambour de frein composite selon l'invention peut comprendre l'une parmi l'une des caractéristiques suivantes, prise seule ou en combinaison :
le corps principal est réalisé en fonderie sous pression,
le tambour de frein comprend en outre une extension faisant saillie de la surface externe du corps principal, l'extension étant adaptée pour :
   augmenter la raideur du tambour de frein, et
   assurer une dissipation thermique,
   un alésage est usiné dans le corps principal, l'alésage étant :
      centré autour de l'axe de symétrie,
      configuré pour positionner le tambour de frein sur un moyeu de roue, et
      de préférence, prolongé, au niveau de la surface interne du corps principal, par un chanfrein, au moins un trou débouchant est usiné dans le corps principal, le trou étant :
         configuré pour recevoir des moyens de fixation du tambour de frein sur un moyeu de roue, et de préférence, chanfreiné, et
         le corps principal comprend un rebord annulaire faisant saillie de la surface externe du corps principal, le rebord étant configuré pour augmenter la raideur du tambour de frein.

Selon un troisième aspect, l'invention propose un système de fabrication d'une couronne de frottement selon la revendication 16.

Avantageusement, mais facultativement, le système de fabrication d'une couronne de frottement selon l'invention peut comprendre l'une parmi l'une des caractéristiques suivantes, prise seule ou en combinaison :
le dispositif de poinçonnage comprend :
un support présentant une surface externe configurée pour être en contact avec la bande lorsque ladite bande est positionnée sur le support, un alésage étant pratiqué au sein de la surface externe du support, et
un serre flanc présentant une surface interne configurée pour venir en contact avec la bande de sorte à presser ladite bande contre la surface externe du support, le serre flanc comprenant en outre un poinçon, mobile par rapport au serre flanc et susceptible de faire saillie de la surface interne du serre flanc, en regard de l'alésage du support, de sorte à emboutir la bande pour y former la protubérance, et
la gorge est configurée pour écraser un sommet de la protubérance de sorte à lui conférer une forme évasée.

Selon un quatrième aspect, on prévoit selon l'invention un procédé de fabrication selon la revendication 19.

Avantageusement, mais facultativement, le procédé est conforme à la revendication 20.

Selon un cinquième aspect, l'invention propose un procédé de fabrication d'une couronne de frottement pour tambour de frein, de préférence pour tambour de frein composite dans lequel la couronne de frottement forme un insert de surmoulage par procédé de fonderie d'un alliage d'aluminium, le procédé de fabrication d'une couronne de frottement comprenant les étapes de :
poinçonnage d'une bande de tôle métallique, de préférence une bande de tôle d'acier, de sorte à y former une protubérance, et
roulage de la bande de tôle métallique de sorte à lui conférer une forme annulaire.

Avantageusement, mais facultativement, le procédé de fabrication d'une couronne de frottement selon l'invention peut comprendre l'une parmi l'une des caractéristiques suivantes, prise seule ou en combinaison :
le poinçonnage est mis en oeuvre avant le roulage,
lors du poinçonnage, la bande est positionnée entre une surface externe d'un support et une surface interne d'un serre flanc comprenant un poinçon, le poinçon étant ensuite mis en mouvement vers la surface externe du support de sorte à emboutir la bande pour y former une protubérance venant alors s'étendre au sein d'un alésage pratiqué dans la surface externe du support,
le procédé de fabrication d'une couronne de frottement comprend, lors du roulage, le défilement de la bande par mise en rotation de deux rouleaux supports et d'un rouleau croqueur,
le procédé de fabrication d'une couronne de frottement comprend, lors du défilement, la déformation de la bande de sorte à lui conférer une forme annulaire de révolution,
le procédé de fabrication d'une couronne de frottement comprend, lors du roulage, l'écrasement d'un sommet de la protubérance de sorte à lui conférer une forme évasée, et
le procédé de fabrication d'une couronne de frottement comprend, à l'issu du roulage, une étape de soudure des extrémités de la bande.

Selon un sixième aspect, l'invention propose un procédé de fabrication d'un tambour de frein, comprenant les étapes de :
fabrication d'une couronne de frottement selon un procédé de fabrication d'une couronne de frottement tel que précédemment décrit, et
surmoulage d'un corps principal en alliage métallique, de préférence en alliage d'aluminium, autour de la couronne de frottement de sorte à noyer la protubérance de la bande.

Avantageusement, mais facultativement, procédé de fabrication d'un tambour de frein selon l'invention peut comprendre l'une parmi l'une des caractéristiques suivantes, prise seule ou en combinaison :
le procédé de fabrication d'un tambour de frein comprend, à l'issu de la fabrication de la couronne de frottement, la déformation élastique de la couronne de frottement en vue de positionner ladite couronne de frottement sur un support de couronne de frottement, et
le procédé de fabrication d'un tambour de frein comprend en outre une étape d'usinage de la couronne de frottement et/ou du corps principal.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
La figure 1 illustre en perspective un exemple de réalisation d'une couronne de frottement selon l'invention.
La figure 2 est une vue en perspective agrandie d'un exemple de réalisation d'une protubérance et d'une empreinte d'un exemple de réalisation d'une couronne de frottement selon l'invention.
La figure 3 est une vue en coupe agrandie d'un exemple de réalisation d'une protubérance et d'une empreinte d'un exemple de réalisation d'une couronne de frottement selon l'invention.
La figure 4 illustre en perspective un exemple de réalisation d'un tambour de frein composite selon l'invention.
La figure 5 illustre en perspective un exemple de réalisation d'un tambour de frein composite selon l'invention.
La figure 6 est une vue en coupe d'une partie d'un exemple de réalisation d'un tambour de frein composite selon l'invention.
La figure 7 est une vue en perspective partiellement coupée d'une partie d'un exemple de réalisation d'un tambour de frein composite selon l'invention.
La figure 8 est une vue en coupe d'une partie d'un exemple de réalisation d'un tambour de frein composite selon l'invention.
La figure 9 est une vue en coupe d'un dispositif de poinçonnage d'un exemple de réalisation d'un système de fabrication d'une couronne de frottement selon l'invention.
La figure 10 est une vue en coupe d'un dispositif de roulage d'un exemple de réalisation d'un système de fabrication d'une couronne de frottement selon l'invention, le dispositif de roulage étant illustré dans deux états successifs de défilement d'une bande.
La figure 11 est une vue dans la coupe XI du dispositif de roulage illustré en figure 10.
La figure 12 illustre en coupe différentes étapes d'un exemple de mise en oeuvre d'un procédé de fabrication d'un tambour de frein composite selon l'invention mis en oeuvre par exemple de système de fabrication d'un tambour de frein selon l'invention.
La figure 13 est un organigramme illustrant un exemple de mise en oeuvre d'un procédé de fabrication d'une couronne de frottement selon l'invention.
La figure 14 est un organigramme illustrant un exemple de mise en oeuvre d'un procédé de fabrication d'un tambour de frein selon l'invention

Sur l'ensemble des figures, les éléments similaires portent des références identiques.

### DESCRIPTION DETAILLEE DE L'INVENTION

### Couronne de frottement 1

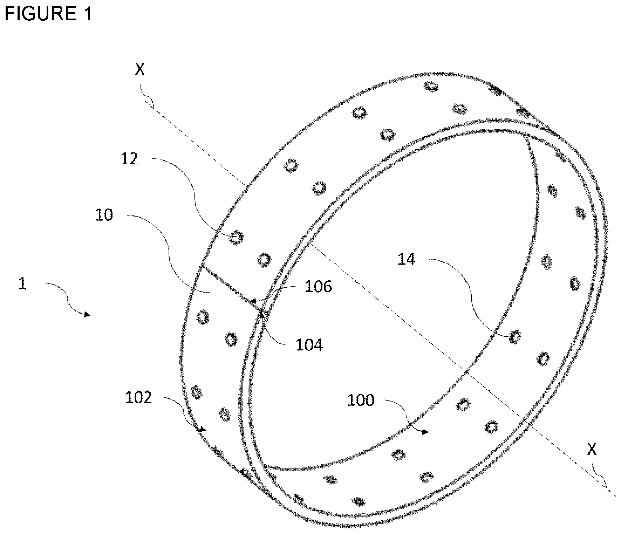

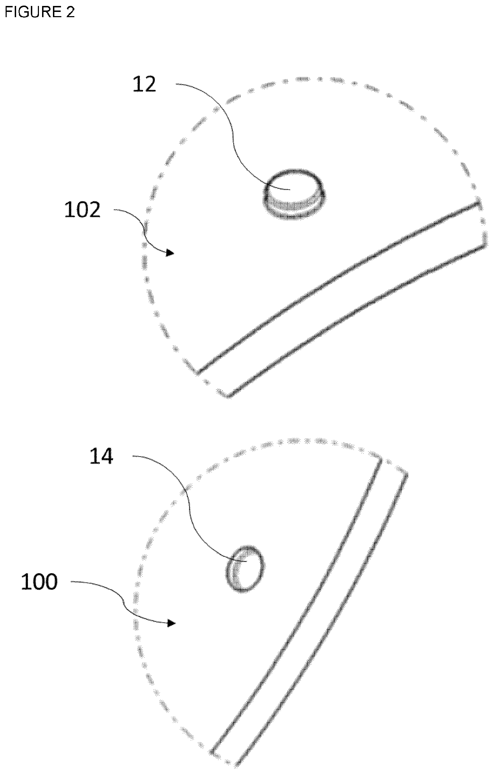

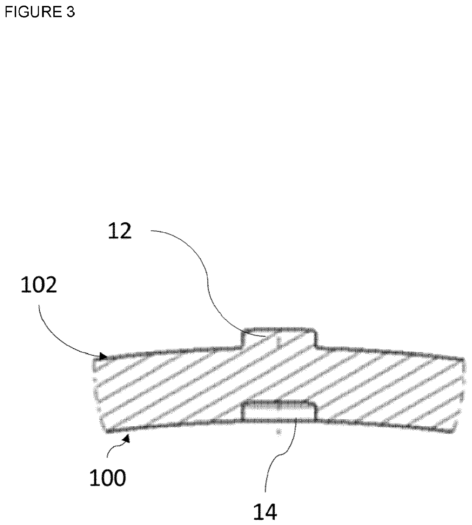

En référence aux figures 1 à 8, une couronne de frottement 1 va à présent être décrite.

La couronne de frottement 1 est particulièrement adaptée pour un tambour de frein composite 2 dans lequel la couronne de frottement 1 forme un insert de surmoulage par procédé de fonderie d'un alliage d'aluminium. Ceci n'est toutefois pas limitatif, puisque le tambour de frein 2 n'est pas nécessairement composite et la fonderie n'est pas nécessairement en alliage d'aluminium, mais peut être réalisée à l'aide de tout type de métal léger et conducteur thermique.

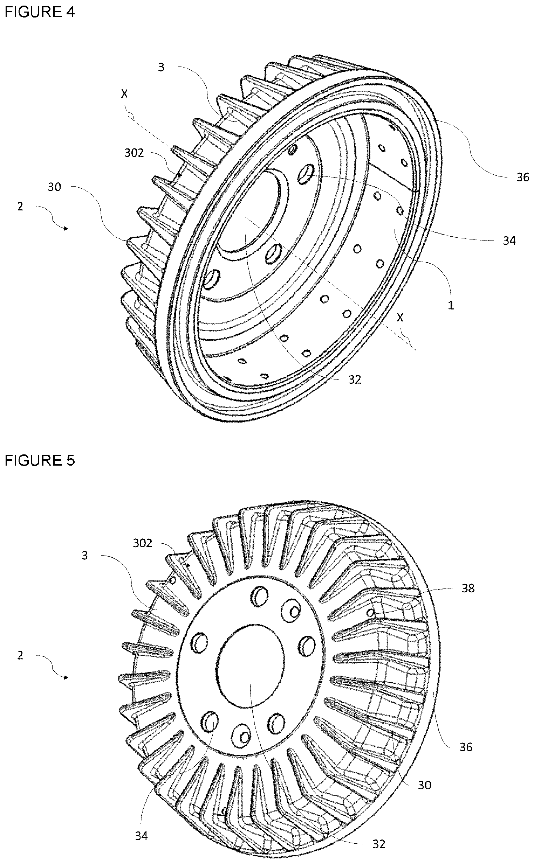

Comme visible sur les figures 1 et 4, la couronne de frottement 1 présente un axe de symétrie X-X autour duquel la couronne de frottement 1 est annulaire ou cylindrique de révolution.

La couronne de frottement 1 est réalisée à partir d'une bande 10 plane, de préférence de tôle métallique, par exemple de tôle d'acier. Cette bande 10 peut par exemple provenir d'une bobine de tôle d'acier. Pour ce faire, la bobine de tôle d'acier est déroulée puis redressée. Enfin, la forme annulaire est conférée à la bande 10 par roulage.

A titre d'exemple non limitatif, la nuance de tôle d'acier utilisée pour la fabrication de la couronne de frottement 1 est « S355J2H » selon la norme EN 10210.

Les propriétés mécaniques de la nuance d'acier « S355J2 », pour des épaisseurs de bande 10 inférieures à 16 mm, sont les suivantes, selon *« AUSA Spécial Steels »* :

| Re (MPa) min. | Rm (MPa) | A (%) min | KV min. à -20°C | Dureté HB |
|---|---|---|---|---|
| 355 | 470-630 | 22 | 27 | 146-187 |

En outre, La composition chimique de cette nuance d'acier est la suivante :

| | C (%) | Mn (%) | Si (%) | P (%) | S (%) | Autres (%) |
|---|---|---|---|---|---|---|
| Min. | | | | | | Cu Max. 0,55 |
| Max. | 0,22 | 1,60 | 0,55 | 0,025 | 0,025 | Al Min. 0,020 |

En général, les tambours de frein en fonte sont réalisés de fonderie dans une nuance GJL200 (norme NF EN 1561). Les propriétés physico-chimiques de cette nuance de fonte sont les suivantes :
Rp0,2 entre 130 et 195 MPa
Rm entre 200 et 300 MPa
A% entre 0,3 et 0,8%
Module d'élasticité entre 88 et 113 GPa
Dureté HB30 entre 150 et 230
Capacité thermique massique (en J/kg/°K) :
   Entre 20°C et 200°C : 460
   Entre 20°C et 600°C : 535
Coefficient de dilatation linéaire (en µm/m/°K) :
   Entre -100°C et +20°C : 10
   Entre +20°C et +200°C : 11,7
   Entre +200°C et +400°C : 13,0
Conductivité thermique (en W/m/°K) :
   A +100°C : 50
   A +200°C : 49
   A +300°C : 48
   A +400°C : 47
   A +500°C : 46
Composition chimique :
   C % entre 2,9 et 3,7
   Si % entre 1,7 et 2,8
   Mn % entre 0,35 et 1,0
   P % entre 0,05 et 0,2
   S % < 0,15
   Cr % entre 0,05 et 0,2

Le choix de la nuance de la tôle d'acier pour la réalisation de la couronne de frottement 1 prend ainsi en compte certaines caractéristiques physico-chimiques, comparativement à la fonte couramment utilisée pour les tambours de frein en fonte, et notamment :
la capacité thermique massique, qui est la capacité thermique d'un matériau rapportée à sa masse ; il s'agit d'une grandeur qui reflète la capacité d'un matériau à accumuler de l'énergie sous forme thermique, pour une masse donnée, quand sa température augmente ; une grande capacité thermique signifie qu'une grande quantité d'énergie peut être stockée, moyennant une augmentation relativement faible de la température ;
la conductivité thermique, qui est une grandeur physique caractérisant le comportement des matériaux lors du transfert thermique par conduction ; elle représente l'énergie (quantité de chaleur) transférée par unité de surface et de temps sous un gradient de température de 1 kelvin ou 1 degré Celsius par mètre ;
le coefficient de dilatation linéaire, qui décrit le changement de volume à pression constante en fonction de la température.

La comparaison de ces caractéristiques entre la fonte et l'acier S355 fournit le tableau ci-dessous.

| **Caractéristique** | **Pour la fonte GJL200** | **Pour l'acier S355J2** | **Remarque** |
|---|---|---|---|
| Capacité thermique massique (J/kg/°K) | 460 à 535 | A peu près 450 | Selon l'échelle des températures jusque 600°C |
| Conductivité thermique (W/m/°K) | 46 à 50 | 35 à 45 | Pour des températures comprises entre 100°C et 500°C |
| Coefficient de dilatation thermique (µm/m/°K) | 10 à 13 | 11,1 à 13,9 | Pour des températures comprises entre 20°C et 500°C |
| Rp0,2 (MPa) | 130 à 195 | 355 min. | L'acier est plus résistant |
| Rm (MPa) | 200 à 300 | 470 à 630 | |
| Module d'élasticité (GPa) | 88 à 113 | 210 | |
| Dureté | HB30 entre 150 et 230 | HB entre 146 et 187 | Dureté max. plus élevée pour la fonte |

Par ailleurs, les coefficients de dilatation thermique entre la fonte GJL200 et l'acier S355J2 sont comparables. Celui des alliages d'aluminium est de l'ordre de 20 à 30 µm/m/°K, soit environ le double. Par conséquent, les phénomènes associés aux différences de coefficient de dilatation linéaire entre la couronne de frottement 1 et un corps principal 3 surmoulé en alliage d'aluminium, phénomènes qui influencent la continuité du contact de l'interface entre la couronne de frottement 1 et le corps principal 3 de son comportement associé aux flux de chaleur, sont sensiblement les mêmes.

La nuance d'acier S355J2 n'est d'ailleurs nullement limitative. La couronne de frottement 1 peut également être réalisée à partir d'une bande 10 de tôle d'acier d'emboutissage selon une nuance métallurgique et un mode de réalisation conforme aux normes NF EN 10130 et NF EN 10111.

En tout état de cause, le choix de la nuance de la tôle d'acier de la couronne de frottement 1 dépend du comportement tribologique entre la couronne de frottement 1 et les garnitures d'organes de freinage, tels que des patins de frottement du dispositif de freinage associé au tambour de frein 2.

Comme visible sur les figures 1 à 3, la bande 10 présente :
une surface interne 100 configurée pour coopérer par frottement avec un organe de freinage, tel que des patins de freinage d'un dispositif de freinage, et
une surface externe 102, opposée à la surface interne 100 et destinée à recevoir un corps principal 3 surmoulé.

De plus, une fois roulée et usinée, la bande 10 présente de préférence les dimensions suivantes :
un diamètre intérieur par rapport à l'axe de symétrie X-X qui est compris entre 100 et 500 millimètres, de préférence compris entre 200 et 300 millimètres, par exemple entre 200 et 250 millimètres, notamment entre 220 et 230 millimètres,
une épaisseur E prise dans un plan orthogonal à l'axe de symétrie qui est comprise entre 2 et 8 millimètres, de préférence comprise entre 4 et 7 millimètres, et
une largeur prise dans une direction parallèle à l'axe de symétrie qui est comprise entre 25 et 75 millimètres, de préférence comprise entre 40 et 60 millimètres.

Avantageusement, cette épaisseur E est la même que l'épaisseur de la couronne de frottement 1 utilisée comme insert de surmoulage. En outre, la largeur de bande 10, par exemple celle de la bobine de tôle, correspond également avantageusement à la largeur de la couronne de frottement 1.

Avantageusement, l'épaisseur de la couronne de frottement 1 est comprise de préférence entre 3 et 10 millimètres avant d'être usinée.

Dans un mode de réalisation notamment illustré en figure 1, la bande 10 présente une première extrémité 104 et une deuxième extrémité 106, opposé à la première extrémité 104, la première extrémité 104 et la deuxième extrémité 106 étant adjacentes bord à bord. Dans une variante avantageuse, la première extrémité 104 et la deuxième extrémité 106 sont soudées entre elles.

Comme également visible sur les figures 1 à 3, la bande 10 comprend au moins une protubérance ou excroissance 12, réalisée à l'aide d'un dispositif de poinçonnage 40 configuré à cet effet.

En référence aux figures 1 à 3, dans un mode de réalisation privilégié, la protubérance 12 fait saillie de la surface externe 102 de la bande 10 et présente une hauteur H ainsi qu'un diamètre. En d'autres termes, elle s'étend radialement vers la périphérie de la couronne de frottement 1. En outre, une empreinte 14 en creux, présentant une profondeur P et un diamètre, est avantageusement formée dans la surface interne 100 de la bande 10, au niveau de la protubérance 12, l'empreinte 14 présentant une forme complémentaire de la protubérance 12. L'empreinte 14 correspond en fait au creux laissé par le refoulement de matière réalisée par un poinçon 4022 du dispositif de poinçonnage 40 pour réaliser la protubérance 12. La hauteur H de protubérance 12 et la profondeur P d'empreinte 14 peuvent évoluer au cours de la fabrication de la couronne de frottement 1, notamment lors d'étapes d'usinage.

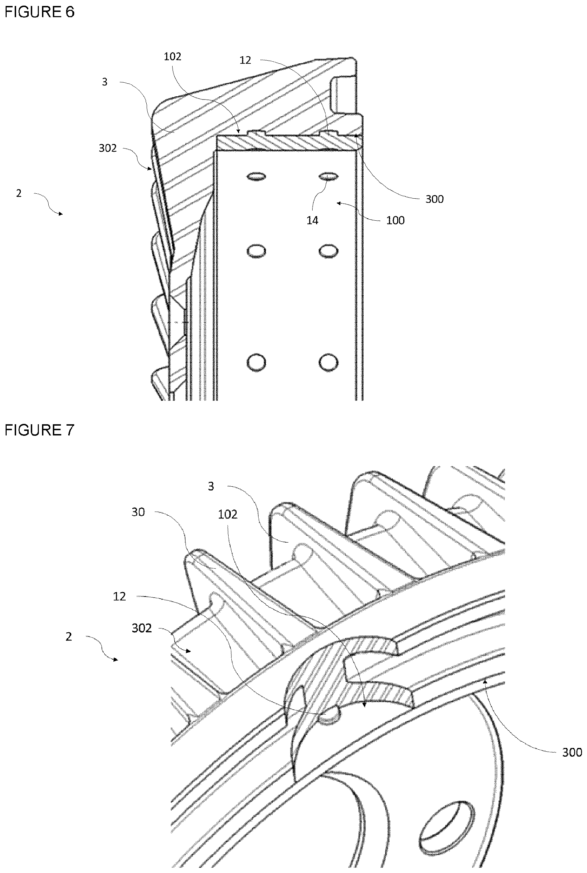

Les figures 6 à 8 illustrent à cet égard, deux variantes de couronnes de frottement 1 distinctes.

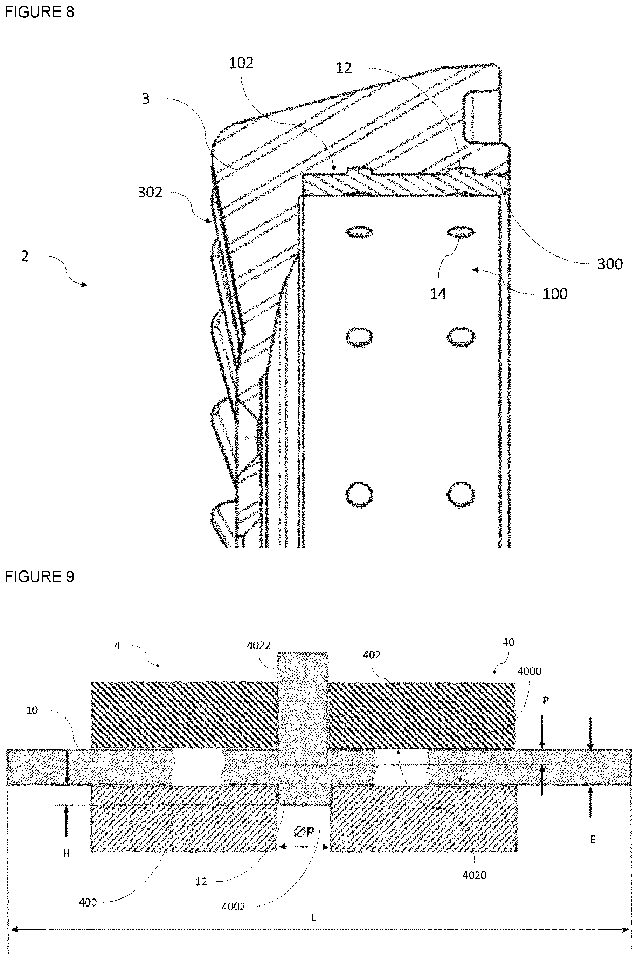

Sur la figure 6, la hauteur H de la protubérance 12, et la profondeur P de l'empreinte 14 sont plus importantes que la hauteur H de la protubérance 12, et la profondeur P de l'empreinte 14 sur la figure 8.

A titre d'exemple, la hauteur H de la protubérance 12, et la profondeur P de l'empreinte 14 sont chacune comprise entre 1,0 et 2,0 millimètres, et valent par exemple chacune 1,5 millimètres. Le diamètre de la protubérance 12 est, dans cet exemple non limitatif, compris entre 4 et 8 millimètres.

En revanche, sur la figure 8, la hauteur H de la protubérance 12 est égale à environ 1,0 millimètre, et l'empreinte 14 a totalement disparu suite à l'usinage de parachèvement du diamètre intérieur de la couronne de frottement 1. L'usinage de parachèvement du diamètre intérieur de la couronne de frottement 1 réduit en effet la profondeur P d'empreinte 14. Avec une profondeur P d'usinage par tournage d'environ 1 millimètre au rayon centré sur l'axe de symétrie X-X, l'empreinte 14 est ainsi éliminée dès lors que la profondeur P d'empreinte 14 est inférieure ou égale à la profondeur P d'usinage.

Avantageusement, la présence d'empreinte 14 sur la surface interne 100 de la couronne de frottement 1 favorise la rétention des poussières d'usure de la piste de frottement et des garnitures des patins de frottement du dispositif de freinage du tambour de frein 2, provoquée par le freinage. Ces pièges à particules présentent donc un avantage environnemental en réduisant le rejet de particules fines. En outre, l'empreinte 14 favorise les conditions de fonctionnement tribologique de la surface interne 100 de la bande formant piste de frottement.

Avantageusement, les dimensions de la protubérance 12 et de l'empreinte 14 sont optimisées de sorte à prendre en compte l'usure de la piste de frottement de la couronne de frottement 1. Ainsi, ces pièges à particules demeurent pendant toute la durée de vie de la couronne de frottement 1.

Dans un mode de réalisation, la protubérance 12 peut également faire saillie de la surface interne 100 de la bande 10. Dans ce cas, l'empreinte 14 en creux est formée dans la surface externe 102 de la bande 10.

Dans un mode de réalisation avantageux, la protubérance 12 présente une portion évasée, par exemple un sommet évasé. Lorsque le sommet est évasé, ceci peut avantageusement lui conférer une forme de champignon. Alternativement, lorsqu'une portion médiale est évasée, par exemple entre le sommet et la base de la protubérance 12, ceci peut lui conférer une forme de tonneau. Ainsi est formée une contre dépouille de la protubérance 12 qui améliore l'ancrage d'un corps principal 3 surmoulé sur la couronne de frottement 1. A titre d'exemple, lorsque la protubérance 12 présente une forme sensiblement cylindrique, notamment une forme cylindrique de révolution, le diamètre de la protubérance 12 au niveau d'une portion de la protubérance, par exemple au niveau du sommet de ladite protubérance 12, est plus grand que le diamètre de la protubérance 12 au niveau de la base de ladite protubérance 12. Ici, la base de la protubérance 12 désigne la portion de la protubérance 12 au niveau de la jonction entre la protubérance 12 et la bande 10.

Dans un mode de réalisation notamment illustré sur la figure 1, la couronne de frottement 1 comprend une pluralité de protubérance 12 réparties circonférentiellement autour de l'axe de symétrie X-X.

Dans un mode de réalisation privilégié, la couronne de frottement 1 est réalisée à partir d'une bande 10 de tôle roulée-soudée et dans laquelle ont été réalisées deux rangées parallèles de protubérances 12. Sur chaque rangée, les protubérances 12 sont espacées de façon régulière Ceci n'est toutefois pas limitatif, car les protubérances 12 peuvent également ne pas être espacées d'un pas angulaire constant après le roulage de la bande 10. Certaines protubérances 12 peuvent en outre chacune présenter un diamètre différent du diamètre d'autres protubérances 12. Les deux rangées peuvent d'ailleurs être décalées l'une par rapport à l'autre de sorte à ce que les protubérances 12 soient disposées en quinconce. La bande 10 peut également comprendre une unique rangée de protubérances 12, ou bien encore un nombre de rangées de protubérances 12 supérieur à deux, en fonction de la largeur de la couronne de frottement 1, du nombre de protubérances 12 souhaitées, et de leurs distances relatives les unes par rapport aux autres.

En tout état de cause la couronne de frottement 1 présente un avantage économique significatif en termes de coût de fabrication.

A titre d'exemple, la fourniture d'une couronne de frottement 1 roulée ou roulée-soudée, munie d'une pluralité de protubérance 12, telle qu'illustrée en figure 1, et dont les dimensions sont :
diamètre intérieur : 226,5 +/- 0,25 millimètres,
épaisseur E : 6 millimètres
largeur : 50,5 +/- 0,2 millimètres, par exemple issue du refendage de la tôle bobinée,
a été évaluée à environ deux euros de moins que la version équivalente décrite par EP 2 497 967, soit un gain sur achat de pièce ouvrée extérieure d'environ 40%, le coût de la couronne de frottement 1 ne représentant que 19% du prix du tambour de frein 2 correspondant, au lieu de 26% pour une version équipée d'une couronne de frottement telle que décrite par EP 2 497 967. Cela se traduit par une économie d'environ 16% sur le prix du tambour de frein.

### Tambour de frein composite 2

En référence aux figures 4 à 8, un tambour de frein composite 2 comprend une couronne de frottement 1, par exemple telle que précédemment décrite, ainsi qu'un corps principal 3. Le corps principal 3 est surmoulé autour de la couronne de frottement 1 qui est alors utilisée comme insert de surmoulage, lors de sa mise en place dans un moule de fonderie permettant la réalisation du corps principal 3.

Le corps principal 3 est en métal, de préférence en alliage métallique léger, par exemple un alliage d'aluminium. Dans une variante avantageuse, le corps principal 3 est réalisé en fonderie sous pression, par exemple d'un alliage d'aluminium.

Comme visible sur les figures 4 à 8, le corps principal 3 est surmoulé autour de la couronne de frottement 1 de sorte à noyer la protubérance 12 de la bande 10 afin de prévenir un mouvement relatif de la couronne de frottement 1 par rapport au corps principal 3.

Comme également visible sur ces figures, le corps principal 3 est centré autour de l'axe de symétrie X-X de la couronne de frottement 1.

En outre, le corps principal 3 présente :
une surface interne 300 en contact avec la couronne de frottement 1, et
une surface externe 302, opposée à la surface interne 300.

En référence aux figures 4 à 8, dans un mode de réalisation, le corps principal 3 comprend une extension 30 faisant saillie de la surface externe 302 du corps principal 3, l'extension 30 étant adaptée pour :
augmenter la raideur du tambour de frein 2, et
assurer une dissipation thermique.

Comme visible plus précisément sur les figures 4 et 5, le corps principal 3 comprend une pluralité d'extension ou formes 30 qui servent à la fois de raidisseur et d'ailettes de dissipation thermique pour permettre de mieux refroidir le tambour de frein 2 lorsque ce dernier a accumulé de la chaleur générée par les frottements et les couples de freinage, cette chaleur étant principalement et initialement absorbée par la couronne de frottement 1 à la suite de sollicitations de freinage.

En référence aux figures 4 et 5, un alésage 32 est usiné dans le corps principal 3, l'alésage 32 étant :
centré autour de l'axe de symétrie X-X, et
configuré pour positionner le tambour de frein 2 sur un moyeu de roue.

Comme visible sur ces figures, dans une variante avantageuse, l'alésage 32 est prolongé, au niveau de la surface interne 300 du corps principal 3, par un chanfrein, afin de faciliter le montage du tambour de frein 2 sur le moyeu de roue. En tout état de cause, l'alésage 32 est obtenu par usinage sur le tambour de frein 2 réalisé initialement par le procédé de fonderie.

Toujours en référence aux figures 4 et 5, dans un mode de réalisation, un trou débouchant 34 est usiné dans le corps principal 3, le trou 34 étant configuré pour recevoir des moyens de fixation du tambour de frein 2 sur un moyeu de roue. De préférence, le trou 34 est chanfreiné.

Dans le mode de réalisation illustré sur les figures 4 et 5, une pluralité de trous 34 sont usinées dans le corps principal 34 permettant ainsi la fixation du tambour de frein 2 sur le moyeu de roue à l'aide de vis de fixation. Ces trous 34 sont réalisés soit par reprise d'usinage de trous ébauchés lors du procédé de fonderie initial, soit en perçant directement sur un voile central du corps principal 3. L'usinage ou le parachèvement par usinage des trous 34 permet d'obtenir des diamètres de trous 34 suffisamment précis et positionnés également avec précision par rapport à l'alésage 32. A titre d'exemple non limitatif, sept trous 34 dont deux sont chanfreinés sont usinés dans le corps principal 3. Ces trous 34 chanfreinés peuvent servir de détrompeurs lors du montage du tambour de frein 2 sur le moyeu de roue. Plus précisément, les trous 34 qui ne sont pas chanfreinés servent à fixer le tambour de frein 2 à l'aide de vis tandis que les trous 34 chanfreinés permettent d'indexer angulairement le tambour de frein 2 lors du montage de sorte à orienter les trous 34 non chanfreinés.

De retour aux figures 4 et 5, le corps principal comprend un rebord annulaire 36 faisant saillie de la surface externe du corps principal 3, le rebord 36 étant configuré pour augmenter la raideur du tambour de frein 2, limitant ainsi la déformation radiale du tambour de frein 2 lorsque la piste de frottement de la couronne de frottement 1 est soumise aux pressions exercées par les patins de frottement lors de sollicitations de freinage. Par ailleurs, le rebord annulaire 36 augmente la résistance du corps principal 3. Avantageusement, les formes 30 se raccordent sur le bord annulaire 36.

Des trous non débouchant 38 peuvent également être réalisés, dans un mode de réalisation, lors du procédé de fonderie initial. Ces trous non débouchant 38 sont alors formés par des broches du moule de fonderie utilisé pour la réalisation du surmoulage du corps principal 3, lesdites broches servant de butées pour la fin de mise en place et le maintien en position de la couronne de frottement 1 dans le moule de fonderie. Le nombre de trous non débouchant 38 est au minimum égal à l'unité, avantageusement au nombre de trois.

Les essais sur banc de freinage montrent l'intérêt d'un tel tambour de frein 2 composite en termes de réduction des échauffements du tambour de frein 2 et de sa capacité à évacuer la chaleur générée par les sollicitations de freinage. Cette capacité de dissipation thermique très élevée peut tolérer quelques écarts concernant la conductivité thermique et la capacité thermique du matériau constitutif de la couronne de frottement 1, dans la mesure où les dimensions de la couronne de frottement 1 sont sensiblement les mêmes. Ce tambour de frein 2 bi-matière offre également une avantageuse réduction de poids.

La topologie de la surface d'échange thermique entre la couronne de frottement 1 et le dissipateur thermique constitué par le corps principal 3, par exemple en alliage d'aluminium, surmoulé autour de ladite couronne de frottement 1 doit être également prise en compte pour l'efficacité du tambour de frein 2.

En tout état de cause, la (ou les) protubérance(s) 12 offre(nt) les avantages suivants :
formation de butées s'opposant au mouvement relatif de la couronne de frottement 1 par rapport au corps principal 3 surmoulé, et
augmentation de la surface d'échange thermique entre la périphérie extérieure de la couronne de frottement 1 et le corps principal 3 surmoulé.

### Système de fabrication 4 d'une couronne de frottement 1

En référence aux figures 9 à 11, un système de fabrication 4 d'une couronne de frottement 1 pour tambour de frein 2, de préférence pour tambour de frein 2 composite dans lequel la couronne de frottement 1 forme un insert de surmoulage par procédé de fonderie d'un métal, par exemple d'un alliage d'aluminium, comprend :
un dispositif de poinçonnage 40 configuré pour former une protubérance 12 au sein d'une bande 10 de tôle métallique, de préférence une bande 10 de tôle d'acier, et
un dispositif de roulage 42 configuré pour conférer une forme annulaire de révolution à une bande 10 de tôle métallique, de préférence une bande 10 de tôle d'acier.

Avantageusement, le système de fabrication 4 d'une couronne de frottement 1 comprend un dévidoir-redresseur permettant de déroulée et redressée une bobine de tôle avant roulage et/ou poinçonnage.

En référence à la figure 9, dans un mode de réalisation, le dispositif de poinçonnage 40 comprend :
un support 400 présentant une surface externe 4000 configurée pour être en contact avec la bande 10 lorsque ladite bande 10 est positionnée sur le support 400, un alésage 4002 étant pratiqué au sein de la surface externe 4000 du support 400, et
un serre flanc 402 présentant une surface interne 4020 configurée pour venir en contact avec la bande 10 de sorte à presser ladite bande 10 contre la surface externe 4000 du support 400, le serre flanc 402 comprenant en outre un poinçon 4022, mobile par rapport au serre flanc 402 et susceptible de faire saillie de la surface interne 4020 du serre flanc 402, en regard de l'alésage 4002 du support 400, de sorte à emboutir la bande 10 pour y former la protubérance 12.

Le poinçon 4022 peut être cylindrique, ou à section polygonale. En outre, le dispositif de poinçonnage 40 peut comprendre une butée de fin de course du poinçon 4022. En règle générale, le poinçon 4022 présente un diamètre légèrement inférieur au diamètre de l'empreinte 14 qu'il est susceptible d'imprimer dans une bande 10, par exemple une bande 10 de tôle métallique telle qu'une tôle d'acier. Le dispositif de poinçonnage 40 peut comprendre une pluralité de poinçons 4022 qui sont susceptibles d'agir en même temps sur la bande, 10 permettant ainsi de réaliser plusieurs protubérances 12 d'un seul coup de presse.

En tout état de cause, le dispositif de poinçonnage 40 est modulable de sorte à pouvoir adapter la position et les dimensions des protubérances 12 sur la bande 10.

Avantageusement, le système de fabrication 14 d'une couronne de frottement 1 comprend un dispositif de découpe configuré pour cisailler la bande 10 à réaliser de sorte à lui conférer une longueur L souhaitée.

Dans une variante également avantageuse, le système de fabrication 4 d'une couronne de frottement 1 comprend un dispositif de déplacement en translation de la bande configuré pour assurer un déplacement en translation de la bande 10 entre le support 400 et le serre flanc 402 au fur et à mesure du poinçonnage.

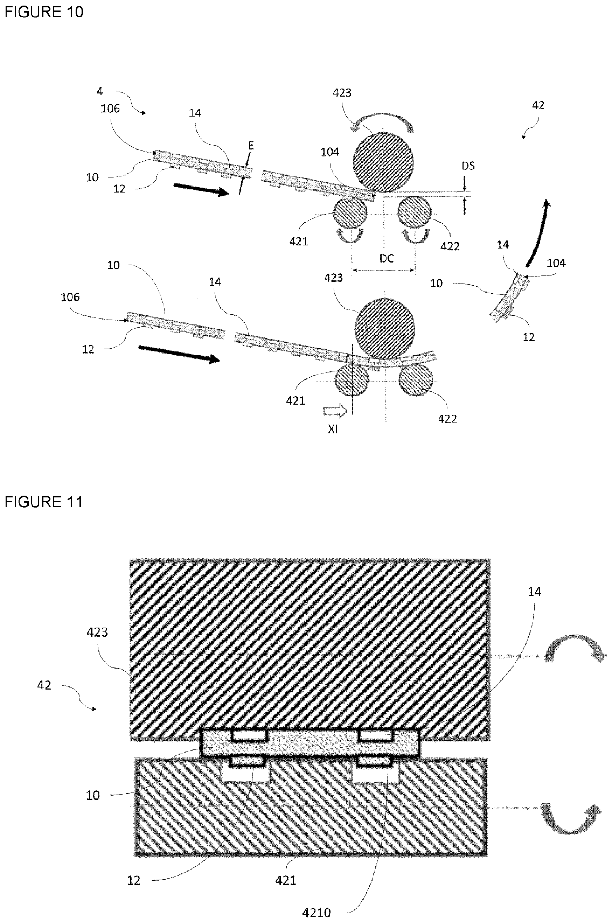

En référence aux figures 10 et 11, le dispositif de roulage 42 comprend deux rouleaux supports 421, 422 et un rouleau croqueur 423 configurés pour faire défiler la bande 10 et pour conférer la forme annulaire à la bande 10 au fur et à mesure du défilement. Plus précisément, le principe mécanique du roulage de la bande 10 est basé sur un dispositif à trois rouleaux 421, 422, 423. L'une des extrémités 104, 106 de la bande 10 est introduite entre les rouleaux 421, 422, 423. Au moins l'un des rouleaux 421, 422, 423 est animé d'un mouvement de rotation motorisé qui permet d'entrainer par contact la bande 10. Le roulage peut d'ailleurs être mis en oeuvre avec contrainte de sorte à ce que les deux extrémités 104, 106 de la bande 10, une forme sa forme annulaire acquise, exercent l'une sur l'autre un effort de serrage.

Comme visible plus précisément sur la figure 11, dans un mode de réalisation, l'un au moins parmi les deux rouleaux supports 421, 422 comprend une gorge 4210 configurée pour loger la protubérance 12 lors du défilement de la bande 10, et ce sans les déformer. Dans une variante alternative, la gorge 4210 est configurée pour écraser un sommet de la protubérance 12 de sorte à lui conférer une forme évasée.

Dans un mode de réalisation, d'autres mécanismes permettant de guider latéralement la bande 10 sont adaptés sur le dispositif de roulage 42 de manière à garantir une jointure bord à bord des extrémités 104, 106 de la bande 10.

En tout état de cause, les principaux paramètres de réglage du dispositif de roulage 42 afin de régler les dimensions de la bande 10 (notamment longueur L, largeur et diamètre intérieur) :
le diamètre du rouleau croqueur 423,
le diamètre des rouleaux supports 421, 422,
la vitesse d'entrainement en rotation des rouleaux 421, 422, 423,
la distance DS séparant les surfaces des rouleaux 421, 422, 423, et
la distance DC séparant les axes de rotation des rouleaux supports 421, 422.

### Système de fabrication d'un tambour de frein composite

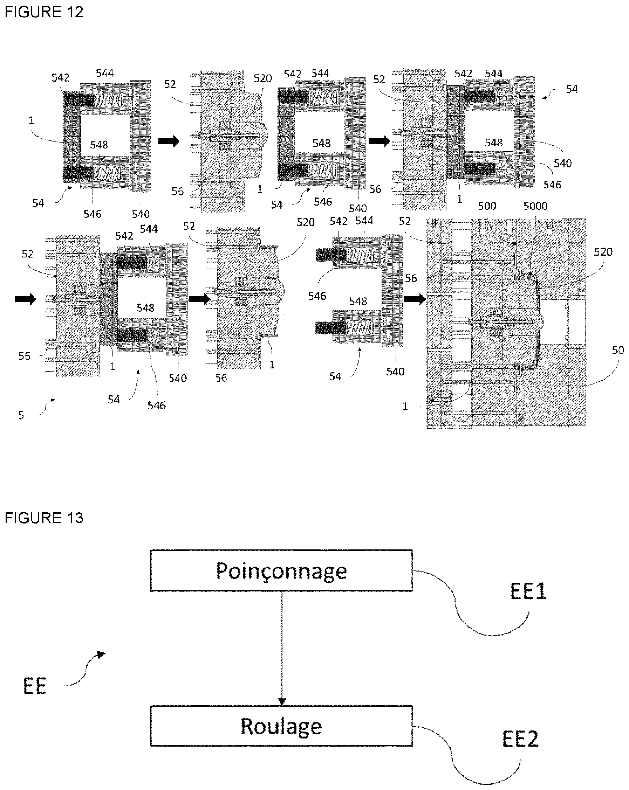

En référence à la figure 12, un système de fabrication 5 d'un tambour de frein 2, de préférence un tambour de frein composite 2, comprend :
une première partie de moule 50 présentant une surface externe 500 dans laquelle est formée une empreinte 5000 de corps principal 3 de tambour de frein 2, et
une deuxième partie de moule 52, mobile par rapport à la première partie de moule 50, et comprenant un support de couronne de frottement 520.

Comme visible sur la figure 12, dans un mode de réalisation, le système de fabrication 5 d'un tambour de frein 3 comprend en outre un dispositif de pose 54 configuré pour déformer élastiquement une couronne de frottement 1 en vue de positionner ladite couronne de frottement 1 sur le support de couronne de frottement 520. Ceci permet en effet de réaliser la couronne de frottement 1 du tambour de frein 2 sans soudage de ses extrémités 104, 106. Le dispositif de pose 54 peut notamment comprendre un bras de robot de chargement 540 adapté pour écarter légèrement la couronne de frottement 1 afin d'augmenter son diamètre moyen intérieur, ce qui augmentera le jeu de centrage entre l'alésage déformé de la couronne de frottement 1 et le diamètre du support de couronne de frottement 520. Une fois la couronne de frottement 1 placée autour du support de couronne de frottement 520, le dispositif de pose 54 est adapté pour relâcher les contraintes appliquées pour l'écartement de la couronne de frottement 1, et ainsi laisser la couronne de frottement 1, par retour élastique, reprendre son diamètre intérieur d'origine. Le dispositif de pose 54 permet ainsi de limiter ainsi le jeu avec le support de couronne de frottement 520, ce qui évite les risques d'infiltration de l'alliage léger entre le support de couronne de frottement 520 et la couronne de frottement 1 pendant l'opération de fonderie, en particulier en fonderie sous pression d'un alliage d'aluminium permettant l'obtention du corps principal 3 du tambour de frein composite 1.

De retour à la figure 12, le système de fabrication 5 peut en outre comprendre :
un éjecteur 56 utilisé également comme butée pour la mise en place de la couronne de frottement 1 sur le support de couronne de frottement 520,
un dispositif à broche permettant la mise en place définitive de la couronne de frottement 1 à la fermeture de la deuxième partie de moule 52 sur la première partie de moule 50.

### Procédé de fabrication d'une couronne de frottement

En référence aux figures 9, 10, 11 et 13, un procédé de fabrication EE d'une couronne de frottement 1 pour tambour de frein 2, de préférence pour tambour de frein composite 2 dans lequel la couronne de frottement 1 forme un insert de surmoulage par procédé de fonderie d'un alliage d'aluminium, comprend les étapes de :
poinçonnage EE1 d'une bande 10 de tôle métallique, de préférence une bande 10 de tôle d'acier, de sorte à y former une protubérance 12, et
roulage EE2 de la bande 10 de tôle métallique de sorte à lui conférer une forme annulaire.

Dans le mode de mise en oeuvre illustré sur les figures 10 et 13, le poinçonnage EE1 est mis en oeuvre avant le roulage EE2. Ceci n'est toutefois pas limitatif, puisque, alternativement, le poinçonnage EE1 peut également être mise en oeuvre après le roulage EE2.

En référence aux figures 10 et 11, dans un mode de mise en oeuvre, lors du poinçonnage EE1, la bande 10 est positionnée entre une surface externe 4000 d'un support 400 et une surface interne 4020 d'un serre flanc 402 comprenant un poinçon 4022, le poinçon 4022 étant ensuite mis en mouvement vers la surface externe 4000 du support 400 de sorte à emboutir la bande 10 pour y former une protubérance 12 venant alors s'étendre au sein d'un alésage 4002 pratiqué dans la surface externe 4000 du support 400.

Dans un mode de mise en oeuvre également illustré sur les figures 10 et 11, lors du roulage EE2, le défilement de la bande 10 est mis en oeuvre par mise en rotation de deux rouleaux supports 421, 422 et d'un rouleau croqueur 423.

Dans une variante avantageuse illustrée sur la figure 11, le procédé de fabrication E d'une couronne de frottement 1 comprend, lors du défilement, la déformation de la bande 10 de sorte à lui conférer une forme annulaire de révolution.

Dans une autre variante, le procédé de fabrication E d'une couronne de frottement 1 comprend lors du roulage EE2, l'écrasement d'un sommet de la protubérance 12 de sorte à lui conférer une forme évasée. Ceci peut être mis en oeuvre au moyen d'une ou plusieurs gorge(s) 4210 d'un ou plusieurs rouleau(x) support(s) 421, 422 d'un dispositif de roulage 42 d'un système de fabrication 4 d'une couronne de frottement 1. Alternativement, ceci peut être mis en oeuvre au moyen d'une presse configurée à cet effet et intégrée dans le dispositif de poinçonnage 40.

En complément, le procédé de fabrication E d'une couronne de frottement 1 peut comprendre, à l'issu du roulage EE2, une étape de soudure des extrémités de la bande 10.

Avantageusement, le procédé de fabrication E d'une couronne de frottement 1 peut être réalisé à l'aide du système de fabrication 4 illustré sur les figures 10 et 11.

Ainsi, lors de ce mode de mise en oeuvre du procédé de fabrication EE d'une couronne de frottement 1, un poinçon 4022 du dispositif de poinçonnage 40 se déplace vers la bande 10. Puis le poinçon 4022 pénètre l'épaisseur E de la bande 10 jusqu'à une profondeur P définie par la butée de poinçon 4022. La pénétration du poinçon 4022 dans la bande 10 cisaille un volume de bande 10 qui est repoussé au-devant du poinçon 4022 et se transforme en une protubérance 12. Lorsque le poinçon 4022 est cylindrique, la protubérance prend la forme sensiblement cylindrique, présentant un diamètre correspondant à une empreinte 14 cylindrique. Ensuite, le poinçon 4022 remonte pendant que la bande 10 de tôle est toujours plaquée sur le support 400 sous l'effet de l'effort appliqué au serre flanc 402. Lorsque le poinçon 4022 est en position haute, une empreinte 14 demeure dans l'épaisseur E de la bande 10 de tôle, sur une profondeur P. La hauteur H de la protubérance 12 est sensiblement égale à la profondeur P de l'empreinte 14. Lorsque la profondeur P de l'empreinte 14 est supérieure à l'épaisseur E de la bande 10, alors le poinçon 4022 réalise un trou débouchant. Dans le cas contraire, le poinçon 4022 réalise une protubérance 12, ce qui correspond à un « semi-poinçonnage ».

A chaque coup de presse, une partie des protubérances 12 à réaliser sur la bande 10 peut ainsi être réalisée. Dans ce cas, le dévidoir-redresseur déroule la bobine de tôle selon un pas de translation de la bande 10 de tôle dans le dispositif de poinçonnage 40, de manière à réaliser l'ensemble des protubérances 12 en plusieurs coups de presses, et de façon à limiter les efforts nécessaires à chaque coup de presse.

Lorsque l'ensemble des protubérances 12 nécessaire est réalisé, le dispositif de découpe cisaille la bande 10 de tôle de façon à réaliser une bande de tôle de longueur L souhaitée.

Dans une autre variante de réalisation, il est également possible de découper des bandes 10 de tôle de longueur L souhaitée, puis de les disposer l'une après l'autre dans le dispositif de poinçonnage 40, soit en un seul coup de presse, soit en plusieurs coups de presse grâce au dispositif de déplacement en translation de la bande 10.

En tout état de cause, la longueur L souhaitée correspond sensiblement à la longueur déroulée de la couronne de frottement 1.

Cette bande 10 dans laquelle ont été réalisées un ensemble de protubérances 12 est ensuite roulée à l'aide du dispositif de roulage 42 de manière à conformer la bande 10 plane en anneau sensiblement cylindrique. Le dispositif de roulage 42 est avantageusement réglé pour que les deux extrémités 104, 106 de la bande 10 de tôle se rejoindre de façon jointive après roulage EE2.

Avantageusement, une opération de soudage des extrémités de la couronne de frottement 1 est réalisée sur le dispositif de roulage 42. La bande 10 ainsi roulée et soudée forme alors un anneau continu, la soudure de la jointure interdisant l'écartement sous effort de l'anneau formant couronne de frottement 1.

De cette manière, la couronne de frottement 1 peut être fabriquée sans difficultés particulières dans toute industrie spécialisée dans la découpe, le poinçonnage et le roulage de tôle d'acier. Ce procédé de fabrication EE d'une couronne de frottement 1 peut ainsi être réalisé par une multitude de sociétés industrielles, à faible coût.

### Procédé de fabrication d'un tambour de frein

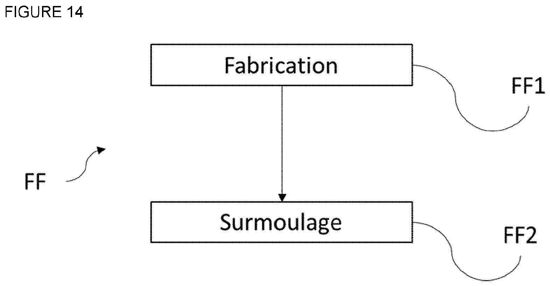

En référence aux figures 12 et 14, un procédé de fabrication FF d'un tambour de frein 2, par exemple de tambour de frein composite 2, comprend les étapes de :
fabrication FF1 d'une couronne de frottement 1, par exemple selon un procédé EE tel que précédemment décrit, et
surmoulage FF2 d'un corps principal 3 en alliage métallique, de préférence en alliage d'aluminium, autour de la couronne de frottement 1.

De cette manière, la protubérance 12 de la bande 10 de la couronne de frottement 1 est noyée.

Dans un mode de mise en oeuvre avantageux, par exemple illustré sur la figure 12, à l'issu de la fabrication FF1 de la couronne de frottement 1, le procédé de fabrication FF du tambour de frein 2 comprend la déformation élastique de la couronne de frottement 1 en vue de positionner ladite couronne de frottement 1 sur un support de couronne de frottement 520 d'un système de fabrication 5 d'un tambour de frein 2. Ceci est notamment rendu possible par le système de fabrication 5 illustré en figure 12.

Plus précisément, le dispositif de pose 54 saisit la couronne de frottement 1, disposée par exemple dans un dépileur, à l'aide de doigts 542 pouvant coulisser en translation dans des logements 544 aménagés dans des blocs supports 546 du dispositif de pose 54. Les blocs supports 546 peuvent s'écarter ou se rétracter les uns par rapport aux autres à l'aide d'un mécanisme piloté mis en place dans le dispositif de pose 54. Ensuite, les blocs supports 546 s'écartent et déforment élastiquement la couronne de frottement 1, si bien que son diamètre moyen intérieur augmente suffisamment pour atteindre le jeu nécessaire pour faciliter la mise en place de ladite couronne de frottement 1 légèrement déformée autour d'un support de couronne de frottement 520. Cette déformation écarte les deux extrémités 104, 106 de la bande 10, si bien que les deux extrémités 104, 106 ne sont plus jointives. Puis, le dispositif de pose 54 positionne la couronne de frottement 1 autour du support de couronne de frottement 520, jusqu'à une certaine position axiale. A la fin de cette étape, la couronne de frottement 1 est toujours légèrement déformée élastiquement et n'est pas dans la position définitive axialement. Au cours de cette étape, les doigts 542 arrivent rapidement en butée avec la forme extérieure du support de couronne de frottement 520, mais peuvent s'escamoter grâce au coulissement autorisé dans leurs logements respectifs 544 aménagés dans les blocs 546 du dispositif de pose 54. Des ressorts 548 sont disposés dans lesdits logements 544 de manière à exercer un effort de poussée progressif sur les doigts 542 au fur et à mesure qu'ils s'escamotent et donc au fur et à mesure de la mise en place de la couronne de frottement 1 autour du support de couronne de frottement 520. Par la suite, la couronne de frottement 1 est logée dans une position provisoire autour du support de couronne de frottement 520. Alors le dispositif de pose 54 annule des efforts d'écartement de la couronne de frottement 1, grâce au mécanisme piloté. La couronne de frottement 1, par effet de retour élastique, reprend sensiblement sa forme initiale. Le diamètre du support de couronne de frottement 520 est dimensionné en conséquence. Les deux extrémités 104, 106 de la bande 10 roulée se rapprochent à nouveau jusqu'à jointure ou jusqu'à ce que leur distance relative soit devenue pratiquement nulle, selon l'écart entre le diamètre du support de couronne de frottement 520 et le diamètre intérieur de la couronne de frottement 1 à l'état libre. Puis, le dispositif de pose 54 se replie de manière à sortir de la zone de fermeture de la deuxième partie de moule 52 sur la première partie de moule 50. Les ressorts 548 repoussent les doigts 542 à leur position initiale. Des systèmes de butées mécaniques limitent la course des doigts 542. La couronne de frottement 1 est alors presque en position définitive dans le moule formé par la deuxième partie de moule 52 rapportée sur la première partie de moule 50. Enfin, la deuxième partie de moule 52 se referme sur la première partie de moule 50 et les dispositifs à broche poussent l'un des flancs de la couronne de frottement 1 jusqu'à ce que la couronne de frottement 1 prenne sa position définitive dans le moule. A la fin de cette étape, le surmoulage du corps principal 3 du tambour de frein 2 autour de la couronne de frottement 1 peut être mis en oeuvre.

Dans un mode de mise en oeuvre également avantageux, le procédé de fabrication FF d'un tambour de frein 2 comprend en outre une étape d'usinage de la couronne de frottement 1 et/ou du corps principal 3 pour l'obtention de caractéristiques dimensionnelles non atteignables en fonderie. Il s'agit notamment, en respectant les tolérances dimensionnelles imposées par le cahier des charges :
d'usiner le diamètre intérieur final de la couronne de frottement 1,
d'usiner des faces de références sur le corps principal 3,
d'usiner le diamètre de centrage du tambour de frein 2,
d'usiner ou de parachever les trous de fixation 34 du tambour de frein 2, et/ou
d'ébavurer le corps principal 3 du tambour de frein 2.

## Revendications

1. Couronne de frottement (1) pour tambour de frein (1), de préférence pour tambour de frein composite, dans lequel la couronne de frottement (1) forme un insert de surmoulage par procédé de fonderie d'un métal, par exemple un alliage d'aluminium, la couronne de frottement (1) :
présentant un axe de symétrie (X-X), et
comprenant une bande (10) de tôle métallique, de préférence une bande de tôle d'acier, ladite bande (10) :
présentant une forme annulaire autour de l'axe de symétrie (X-X), la forme annulaire ayant été formée par roulage de la bande (10), et
comprenant au moins une protubérance (12) ayant été formée par poinçonnage de la bande (10).

2. Couronne de frottement (1) selon la revendication 1, dans lequel la bande (10) présente :
une surface interne (100) configurée pour coopérer par frottement avec un organe de freinage, et
une surface externe (102), opposée à la surface interne (100) et destinée à recevoir un corps principal (3) surmoulé.

3. Couronne de frottement (1) selon la revendication 2, dans laquelle la protubérance (12) fait saillie de la surface externe (102) de la bande (10).

4. Couronne de frottement (1) selon l'une des revendications 2 et 3, dans laquelle une empreinte (14) en creux est formée dans la surface interne (100) de la bande (10), au niveau de la protubérance (12), l'empreinte (14) présentant une forme complémentaire de la protubérance (12).

5. Couronne de frottement (1) selon l'une des revendications 1 à 4, dans laquelle la protubérance (12) présente une portion évasée, par exemple un sommet évasé.

6. Couronne de frottement (1) selon l'une des revendications 1 à 5, dans laquelle la bande (10) présente une première extrémité (104) et une deuxième extrémité (106), opposé à la première extrémité (104), la première extrémité (104) et la deuxième extrémité (106) étant adjacentes bord à bord.

7. Couronne de frottement (1) selon la revendication 6, dans laquelle la première extrémité (104) et la deuxième extrémité (106) sont soudées entre elles.

8. Couronne de frottement (1) selon l'une des revendications 1 à 7, comprenant une pluralité de protubérance (12) réparties circonférentiellement autour de l'axe de symétrie (X-X).

9. Couronne de frottement (1) selon l'une des revendications 1 à 8, dans laquelle la bande (10) présente :
un diamètre intérieur par rapport à l'axe de symétrie (X-X) qui est compris entre 100 et 500 millimètres, de préférence compris entre 200 et 300 millimètres,
une épaisseur (E) prise dans un plan orthogonal à l'axe de symétrie (X-X) qui est comprise entre 2 et 8 millimètres, de préférence comprise entre 4 et 7 millimètres, et
une largeur prise dans une direction parallèle à l'axe de symétrie (X-X) qui est comprise entre 25 et 75 millimètres, de préférence comprise entre 40 et 60 millimètres.

10. Tambour de frein composite (2) comprenant :
une couronne de frottement (1) selon l'une des revendications 1 à 9, et
un corps principal (3) :
surmoulé autour de la couronne de frottement (1) de sorte à noyer la protubérance (12) de la bande (10) afin de prévenir un mouvement relatif de la couronne de frottement (1) par rapport au corps principal (3),
centré autour de l'axe de symétrie (X-X), et
comprenant un métal, par exemple un alliage métallique, de préférence un alliage d'aluminium, le corps principal (3) présentant en outre :
une surface interne (300) en contact avec la couronne de frottement (1), et
une surface externe (302), opposée à la surface interne (300).

11. Tambour de frein (2) selon la revendication 10, dans lequel le corps principal (3) est réalisé en fonderie sous pression.

12. Tambour de frein (2) selon l'une des revendications 10 et 11, comprenant en outre une extension (30) faisant saillie de la surface externe (302) du corps principal (3), l'extension (30) étant adaptée pour :
augmenter la raideur du tambour de frein (2), et
assurer une dissipation thermique.

13. Tambour de frein (2) selon l'une des revendications 10 à 12, dans lequel un alésage (32) est usiné dans le corps principal (3), l'alésage (32) étant :
centré autour de l'axe de symétrie (X-X),
configuré pour positionner le tambour de frein (2) sur un moyeu de roue, et
de préférence, prolongé, au niveau de la surface interne (300) du corps principal (3), par un chanfrein.

14. Tambour de frein (2) selon l'une des revendications 10 à 13, dans lequel au moins un trou (34) débouchant est usiné dans le corps principal (3), le trou (34) étant :
configuré pour recevoir des moyens de fixation du tambour de frein (2) sur un moyeu de roue, et
de préférence, chanfreiné.

15. Tambour de frein (2) selon l'une des revendications 10 à 14, dans lequel le corps principal (2) comprend un rebord annulaire (36) faisant saillie de la surface externe (302) du corps principal (3), le rebord (36) étant configuré pour augmenter la raideur du tambour de frein (2).

16. Système de fabrication (4) d'une couronne de frottement (1) pour tambour de frein (2), de préférence pour tambour de frein composite, dans lequel la couronne de frottement (1) forme un insert de surmoulage par procédé de fonderie d'un métal, par exemple d'un alliage d'aluminium, le système comprenant :
un dispositif de poinçonnage (40) configuré pour former une protubérance (12) au sein d'une bande (10) de tôle métallique, de préférence une bande (10) de tôle d'acier, et
un dispositif de roulage (42) configuré pour conférer une forme annulaire de révolution à une bande (10) de tôle métallique, de préférence une bande (10) de tôle d'acier,
dans lequel le dispositif de roulage (42) comprend deux rouleaux supports (421, 422) et un rouleau croqueur (423) configurés pour faire défiler la bande (10) et pour conférer la forme annulaire à la bande (10) au fur et à mesure du défilement,
dans lequel l'un au moins parmi les deux rouleaux supports (421, 422), de préférence chacun des deux rouleaux supports (421, 422), comprend une gorge (4210) configurée pour loger la protubérance (12) lors du défilement de la bande (10).

17. Système de fabrication (4) d'une couronne de frottement (1) selon la revendication 16, dans lequel le dispositif de poinçonnage (40) comprend :
un support (400) présentant une surface externe (4000) configurée pour être en contact avec la bande (10) lorsque ladite bande (10) est positionnée sur le support (400), un alésage (4002) étant pratiqué au sein de la surface externe (4000) du support (400), et
un serre flanc (402) présentant une surface interne (4020) configurée pour venir en contact avec la bande (10) de sorte à presser ladite bande (10) contre la surface externe (4000) du support (400), le serre flanc (402) comprenant en outre un poinçon (4022), mobile par rapport au serre flanc (402) et susceptible de faire saillie de la surface interne (4020) du serre flanc (402), en regard de l'alésage (4002) du support (400), de sorte à emboutir la bande (10) pour y former la protubérance (12).

18. Système de fabrication (4) d'une couronne de frottement (1) selon la revendication 16 ou 17, dans lequel la gorge (4210) est configurée pour écraser un sommet de la protubérance (12) de sorte à lui conférer une forme évasée.

19. Procédé de fabrication (5) d'un tambour de frein (1) comprenant les étapes consistant à :
former un corps principal (3) de tambour de frein (2) dans une empreinte (5000) d'une surface externe (500) d'une première partie de moule (50), et
déplacer par rapport à la première partie de moule (52) une deuxième partie de moule (52) , comprenant un support portant une couronne de frottement (520) selon l'une quelconque des revendications 1 à 9 de façon à assembler la couronne au corps principal.

20. Procédé selon la revendication 19, dans lequel un dispositif de pose (54) déforme élastiquement la couronne de frottement (1) du tambour de frein (2) en vue de positionner ladite couronne de frottement (1) sur le support de couronne de frottement (520).

21. Procédé de fabrication (EE) d'une couronne de frottement (1) pour tambour de frein (2), de préférence pour tambour de frein composite dans lequel la couronne de frottement (1) forme un insert de surmoulage par procédé de fonderie d'un alliage d'aluminium, le procédé de fabrication (EE) d'une couronne de frottement (1) comprenant les étapes de :
poinçonnage (EE1) d'une bande (10) de tôle métallique, de préférence une bande (10) de tôle d'acier, de sorte à y former une protubérance, et
roulage (EE2) de la bande (10) de tôle métallique de sorte à lui conférer une forme annulaire.

22. Procédé de fabrication (EE) d'une couronne de frottement (1) selon la revendication 21, dans lequel le poinçonnage (EE1) est mis en oeuvre avant le roulage (EE2).

23. Procédé de fabrication (EE) d'une couronne de frottement (1) selon l'une des revendications 21 et 22, dans lequel, lors du poinçonnage (EE1), la bande (10) est positionnée entre une surface externe (4000) d'un support (400) et une surface interne (4020) d'un serre flanc (402) comprenant un poinçon (4022), le poinçon (4022) étant ensuite mis en mouvement vers la surface externe (4000) du support (400) de sorte à emboutir la bande (10) pour y former une protubérance (12) venant alors s'étendre au sein d'un alésage (4002) pratiqué dans la surface externe (4000) du support (400).

24. Procédé de fabrication (EE) d'une couronne de frottement (1) selon l'une des revendications 21 à 23, comprenant, lors du roulage (EE2), le défilement de la bande (10) par mise en rotation de deux rouleaux supports (421, 422) et d'un rouleau croqueur (423).

25. Procédé de fabrication (EE) d'une couronne de frottement (1) selon la revendication 24, comprenant, lors du défilement, la déformation de la bande (10) de sorte à lui conférer une forme annulaire de révolution.

26. Procédé de fabrication (EE) d'une couronne de frottement (1) selon l'une des revendications 21 à 25, comprenant, lors du roulage (EE2), l'écrasement d'un sommet de la protubérance (12) de sorte à lui conférer une forme évasée.

27. Procédé de fabrication (EE) d'une couronne de frottement (1) selon l'une des revendications 21 à 26, comprenant, à l'issu du roulage (EE2), une étape de soudure des extrémités (104, 106) de la bande (10).

28. Procédé de fabrication (FF) d'un tambour de frein (2), comprenant les étapes de :
fabrication (FF1) d'une couronne de frottement (1) selon procédé de fabrication (EE) d'une couronne de frottement (1) de l'une des revendications 21 à 27, et
surmoulage (FF2) d'un corps principal (3) en alliage métallique, de préférence en alliage d'aluminium, autour de la couronne de frottement (1) de sorte à noyer la protubérance (12) de la bande (10).

29. Procédé de fabrication (FF) d'un tambour de frein (2) selon la revendication 28, comprenant, à l'issu de la fabrication (FF1) de la couronne de frottement (1), la déformation élastique de la couronne de frottement (1) en vue de positionner ladite couronne de frottement (1) sur un support de couronne de frottement (520).

30. Procédé de fabrication (FF) d'un tambour de frein (2) selon l'une des revendications 28 et 29, comprenant en outre une étape d'usinage de la couronne de frottement (1) et/ou du corps principal (3).

## Patentansprüche

1. Reibkranz (1) für eine Bremstrommel (1), vorzugsweise für eine Verbundbremstrommel, wobei der Reibkranz (1) ein Einlegeteil zum Umspritzen durch ein Gussverfahren eines Metalls, beispielsweise einer Aluminiumlegierung, bildet, wobei der Reibkranz (1):
eine Symmetrieachse (X-X) aufweist, und
einen Streifen (10) aus Metallblech, vorzugsweise einen Streifen aus Stahlblech, umfasst, wobei der Streifen (10):
eine Ringform um die Symmetrieachse (X-X) aufweist, wobei die Ringform durch Walzen des Streifens (10) gebildet wurde, und
mindestens einen Vorsprung (12) umfasst, der durch Stanzen des Streifens (10) gebildet wurde.

2. Reibkranz (1) nach Anspruch 1, wobei der Streifen (10) Folgendes aufweist:
eine Innenfläche (100), die so konfiguriert ist, dass sie durch Reibschluss mit einem Bremselement zusammenwirkt, und
eine der Innenfläche (100) gegenüberliegende Außenfläche (102) zur Aufnahme eines umspritzten Hauptkörpers (3).

3. Reibkranz (1) nach Anspruch 2, wobei der Vorsprung (12) von der Außenfläche (102) des Streifens (10) vorsteht.

4. Reibkranz (1) nach einem der Ansprüche 2 und 3, wobei in der Innenfläche (100) des Streifens (10) an dem Vorsprung (12) eine Vertiefung (14) ausgebildet ist, wobei die Vertiefung (14) eine zu dem Vorsprung (12) komplementäre Form aufweist.

5. Reibkranz (1) nach einem der Ansprüche 1 bis 4, wobei der Vorsprung (12) einen aufgeweiteten Abschnitt, beispielsweise eine aufgeweitete Spitze, aufweist.

6. Reibkranz (1) nach einem der Ansprüche 1 bis 5, wobei der Streifen (10) ein erstes Ende (104) und ein zweites Ende (106) gegenüber dem ersten Ende (104) aufweist, wobei das erste Ende (104) und das zweite Ende (106) Kante an Kante aneinander angrenzen.

7. Reibkranz (1) nach Anspruch 6, wobei das erste Ende (104) und das zweite Ende (106) miteinander verschweißt sind.

8. Reibkranz (1) nach einem der Ansprüche 1 bis 7 mit einer Vielzahl von Vorsprüngen (12), die in Umfangsrichtung um die Symmetrieachse (X-X) verteilt sind.

9. Reibkranz (1) nach einem der Ansprüche 1 bis 8, wobei der Streifen (10) Folgendes aufweist:
einen Innendurchmesser in Bezug auf die Symmetrieachse (X-X), der zwischen 100 und 500 Millimetern, vorzugsweise zwischen 200 und 300 Millimetern, liegt,
eine Dicke (E), die in einer Ebene orthogonal zur Symmetrieachse (X-X) genommen wird und zwischen 2 und 8 Millimetern, vorzugsweise zwischen 4 und 7 Millimetern, liegt, und
eine Breite, die in einer Richtung parallel zur Symmetrieachse (X-X) genommen wird und zwischen 25 und 75 Millimetern, vorzugsweise zwischen 40 und 60 Millimetern, liegt.

10. Verbundbremstrommel (2) umfassend:
einen Reibkranz (1) nach einem der Ansprüche 1 bis 9, und
einen Hauptkörper (3), der:
um den Reibkranz (1) gegossen ist, so dass der Vorsprung (12) des Streifens (10) versenkt wird, um eine Relativbewegung des Reibkranzes (1) in Bezug auf den Hauptkörper (3) zu verhindern,
um die Symmetrieachse (X-X) zentriert ist, und
ein Metall, beispielsweise eine Metalllegierung, vorzugsweise eine Aluminiumlegierung, umfasst,
wobei der Hauptkörper (3) ferner Folgendes aufweist:
eine Innenfläche (300) in Kontakt mit dem Reibkranz (1), und
eine der Innenfläche (300) gegenüberliegende Außenfläche (302).

11. Bremstrommel (2) nach Anspruch 10, wobei der Hauptkörper (3) durch Druckguss hergestellt wird.

12. Bremstrommel (2) nach einem der Ansprüche 10 und 11, die ferner eine Verlängerung (30) aufweist, die von der Außenfläche (302) des Hauptkörpers (3) vorsteht, wobei die Verlängerung (30) geeignet ist zum:
Erhöhen der Steifigkeit der Bremstrommel (2), und
Gewährleisten einer Wärmeableitung.

13. Bremstrommel (2) nach einem der Ansprüche 10 bis 12, wobei eine Bohrung (32) in den Hauptkörper (3) eingearbeitet ist, wobei die Bohrung (32):
um die Symmetrieachse (X-X) zentriert ist,
dafür konfiguriert ist, die Bremstrommel (2) auf einer Radnabe zu positionieren, und
vorzugsweise an der Innenfläche (300) des Hauptkörpers (3) durch eine Fase verlängert wird.

14. Bremstrommel (2) nach einem der Ansprüche 10 bis 13, wobei mindestens ein Durchgangsloch (34) in den Hauptkörper (3) eingearbeitet ist, wobei das Loch (34):
dafür konfiguriert ist, Befestigungsmittel der Bremstrommel (2) auf einer Radnabe aufzunehmen, und
vorzugsweise abgeschrägt ist.

15. Bremstrommel (2) nach einem der Ansprüche 10 bis 14, wobei der Hauptkörper (2) einen ringförmigen Rand (36) aufweist, der von der Außenfläche (302) des Hauptkörpers (3) vorsteht, wobei der Rand (36) dafür konfiguriert ist, die Steifigkeit der Bremstrommel (2) zu erhöhen.

16. System zur Herstellung (4) eines Reibkranzes (1) für eine Bremstrommel (2), vorzugsweise für eine Verbundbremstrommel, wobei der Reibkranz (1) ein Einlegeteil zum Umspritzen durch ein Gussverfahren eines Metalls, beispielsweise einer Aluminiumlegierung, bildet, wobei das System Folgendes umfasst:
eine Stanzvorrichtung (40), die dafür konfiguriert ist, einen Vorsprung (12) innerhalb eines Streifens (10) aus Metallblech, vorzugsweise eines Streifens (10) aus Stahlblech, auszubilden, und
eine Walzvorrichtung (42), die dafür konfiguriert ist, einem Streifen (10) aus Metallblech, vorzugsweise einem Streifen (10) aus Stahlblech, eine ringförmige Rotationsform zu verleihen,
wobei die Walzvorrichtung (42) zwei Stützwalzen (421, 422) und eine Anbiegewalze (423) umfasst, die dafür konfiguriert sind, den Streifen (10) durchlaufen zu lassen und dem Streifen (10) während des Durchlaufs die Ringform zu verleihen,
wobei mindestens eine der beiden Stützwalzen (421, 422), vorzugsweise jede der beiden Stützwalzen (421, 422), eine Nut (4210) aufweist, die dafür konfiguriert ist, während des Durchlaufs des Streifens (10) den Vorsprung (12) aufzunehmen.

17. System zur Herstellung (4) eines Reibkranzes (1) nach Anspruch 16, wobei die Stanzvorrichtung (40) Folgendes umfasst:
einen Träger (400) mit einer Außenfläche (4000), die dafür konfiguriert ist, mit dem Streifen (10) in Kontakt zu sein, wenn der Streifen (10) auf dem Träger (400) positioniert ist, wobei in der Außenfläche (4000) des Trägers (400) eine Bohrung (4002) ausgebildet ist, und
einen Niederhalter (402) mit einer Innenfläche (4020), der dafür konfiguriert ist, mit dem Streifen (10) in Kontakt zu kommen, so dass der Streifen (10) gegen die Außenfläche (4000) des Trägers (400) gedrückt wird, wobei der Niederhalter (402) ferner einen Stempel (4022) umfasst, der relativ zum Niederhalter (402) beweglich ist und von der Innenfläche (4020) des Niederhalters (402) gegenüber der Bohrung (4002) des Trägers (400) vorstehen kann, so dass der Streifen (10) tiefgezogen wird, um darin den Vorsprung (12) zu bilden.

18. System zur Herstellung (4) eines Reibkranzes (1) nach Anspruch 16 oder 17, wobei die Nut (4210) dafür konfiguriert ist, eine Spitze des Vorsprungs (12) zusammenzudrücken, um ihm eine aufgeweitete Form zu verleihen.

19. Verfahren zur Herstellung (5) einer Bremstrommel (1) mit den folgenden Schritten:
Ausbilden eines Hauptkörpers (3) der Bremstrommel (2) in einer Vertiefung (5000) einer Außenfläche (500) eines ersten Formteils (50), und
Bewegen eines zweiten Formteils (52), das einen Träger umfasst, der einen Reibkranz (520) nach einem der Ansprüche 1 bis 9 trägt, relativ zu dem ersten Formteil (52), um den Reibkranz mit dem Hauptkörper zu verbinden.

20. Verfahren nach Anspruch 19, wobei eine Setzvorrichtung (54) den Reibkranz (1) der Bremstrommel (2) elastisch verformt, um den Reibkranz (1) auf dem Reibkranzträger (520) zu positionieren.

21. Verfahren zur Herstellung (EE) eines Reibkranzes (1) für eine Bremstrommel (2), vorzugsweise für eine Verbundbremstrommel, wobei der Reibkranz (1) ein Einlegeteil zum Umspritzen durch ein Gussverfahren einer Aluminiumlegierung bildet, wobei das Verfahren zur Herstellung (EE) eines Reibkranzes (1) die folgenden Schritte umfasst:
Stanzen (EE1) eines Streifens (10) aus Metallblech, vorzugsweise eines Streifens (10) aus Stahlblech, um darin einen Vorsprung auszubilden, und
Walzen (EE2) des Streifens (10) aus Metallblech, um ihm eine Ringform zu verleihen.

22. Verfahren zur Herstellung (EE) eines Reibkranzes (1) nach Anspruch 21, wobei das Stanzen (EE1) vor dem Walzen (EE2) durchgeführt wird.

23. Verfahren zur Herstellung (EE) eines Reibkranzes (1) nach einem der Ansprüche 21 und 22, wobei bei dem Stanzen (EE1) der Streifen (10) zwischen einer Außenfläche (4000) eines Trägers (400) und einer Innenfläche (4020) eines Niederhalters (402), der einen Stempel (4022) umfasst, positioniert wird, wobei der Stempel (4022) dann in Richtung der Außenfläche (4000) des Trägers (400) bewegt wird, so dass der Streifen (10) tiefgezogen wird, um darin einen Vorsprung (12) zu bilden, der sich dann in eine Bohrung (4002) erstreckt, die in die Außenfläche (4000) des Trägers (400) eingearbeitet ist.

24. Verfahren zur Herstellung (EE) eines Reibkranzes (1) nach einem der Ansprüche 21 bis 23, das beim Walzen (EE2) den Durchlauf des Streifens (10) durch Drehen von zwei Stützwalzen (421, 422) und einer Anbiegewalze (423) umfasst.

25. Verfahren zur Herstellung (EE) eines Reibkranzes (1) nach Anspruch 24, das beim Durchlauf das Verformen des Streifens (10) umfasst, um ihm eine ringförmige Rotationsform zu verleihen.

26. Verfahren zur Herstellung (EE) eines Reibkranzes (1) nach einem der Ansprüche 21 bis 25, das beim Walzen (EE2) das Zusammendrücken einer Spitze des Vorsprungs (12) umfasst, um ihm eine aufgeweitete Form zu verleihen.

27. Verfahren zur Herstellung (EE) eines Reibkranzes (1) nach einem der Ansprüche 21 bis 26, das nach dem Walzen (EE2) einen Schritt des Verschweißens der Enden (104, 106) des Streifens (10) umfasst.

28. Verfahren zur Herstellung (FF) einer Bremstrommel (2), das die folgenden Schritte umfasst:
Herstellen (FF1) eines Reibkranzes (1) mit dem Verfahren zur Herstellung (EE) eines Reibkranzes (1) nach einem der Ansprüche 21 bis 27, und
Umspritzen (FF2) eines Hauptkörpers (3) aus einer Metalllegierung, vorzugsweise einer Aluminiumlegierung, um den Reibkranz (1), so dass der Vorsprung (12) des Streifens (10) versenkt wird.

29. Verfahren zur Herstellung (FF) einer Bremstrommel (2) nach Anspruch 28, das nach dem Herstellen (FF1) des Reibkranzes (1) das elastische Verformen des Reibkranzes (1) umfasst, um den Reibkranz (1) auf einem Reibkranzträger (520) zu positionieren.

30. Verfahren zur Herstellung (FF) einer Bremstrommel (2) nach einem der Ansprüche 28 und 29, das weiter einen Schritt des Bearbeitens des Reibkranzes (1) und/oder des Hauptkörpers (3) umfasst.

## Claims

1. Friction ring (1) for a brake drum (1), preferably for a composite brake drum, wherein the friction ring (1) forms an insert for overmolding by a foundry method of a metal, for example an aluminum alloy, the friction ring (1):
having an axis of symmetry (X-X), and
comprising a sheet metal strip (10) preferably a strip of sheet steel, said strip (10):
having an annular shape around the axis of symmetry (X-X), the annular shape having been formed by rolling the strip (10), and
comprising at least one protrusion (12) having been formed by punching the strip (10).

2. Friction ring (1) according to claim 1, wherein the strip (10) has:
an inner surface (100) configured for cooperating by friction with a braking member,
and
an outer surface (102), opposite to the inner surface (100) and intended to receive an overmolded main body (3).

3. Friction ring (1) according to claim 2, wherein the protrusion (12) protrudes from the outer surface (102) of the strip (10).

4. Friction ring (1) according to one of claims 2 and 3, wherein a hollow impression (14) is formed in the inner surface (100) of the strip (10), at the protrusion (12), the impression (14) having a shape complementary to the protrusion (12).

5. Friction ring (1) according to one of claims 1 to 4, wherein the protrusion (12) has a flaring portion, for example a flaring peak.

6. Friction ring (1) according to one of claims 1 to 5, wherein the strip (10) has a first end (104) and a second end (106), opposite to the first end (104), the first end (104) and the second end (106) being adjacent, edge to edge.

7. Friction ring (1) according to claim 6, wherein the first end (104) and the second end (106) are welded together.

8. Friction ring (1) according to one of claims 1 to 7, comprising a plurality of protrusions (12) distributed circumferentially around the axis of symmetry (X-X).

9. Friction ring (1) according to one of claims 1 to 8, wherein the strip (1) has:
an inner diameter relative to the axis of symmetry (X-X) which is comprised between 100 and 500 millimeters, preferably comprised between 200 and 300 millimeters,
a thickness (E) taken in a plane orthogonal to the axis of symmetry (X-X) which is comprised between 2 and 8 millimeters, preferably comprised between 4 and 7 millimeters, and
a width taken in a direction parallel to the axis of symmetry (X-X) which is comprised between 25 and 75 millimeters, preferably comprised between 40 and 60 millimeters.

10. Composite brake drum (2) comprising:
a friction ring (1) according to one of claims 1 to 9, and a main body (3):
overmolded around the friction ring (1) so as to embed the protrusion (12) of the strip (10) in order to prevent relative movement of the friction ring (1) relative to the main body (3),
centered around the axis of symmetry (X-X), and
comprising a metal, for example a metal alloy, preferably an aluminum alloy,
the main body (3) also having:
an inner surface (300) in contact with the friction ring (1), and
an outer surface (302), opposite to the inner surface (300).

11. Brake drum (2) according to claim 10, wherein the main body (3) is made by die casting.

12. Brake drum (2) according to one of claims 10 and 11, also comprising an extension (30) protruding from the outer surface (302) of the main body (3), the extension (30) being suitable for:
increasing the stiffness of the brake drum (2) and
providing thermal dissipation.

13. Brake drum (2) according to one of claims 10 to 12, wherein a bore (32) is machined in the main body (3), the bore (32) being:
centered around the axis of symmetry (X-X),
configured for positioning the brake drum (2) on a wheel hub, and preferably continued at the inner surface (300) of the main body (3) by a chamfer.

14. Brake drum (2) according to one of claims 10 to 13, wherein at least one through hole (34) is machined in the main body (3), the hole (34) being:
configured for receiving the attachment means of the brake drum (2) to a wheel hub,
and
preferably, chamfered.

15. Brake drum (2) according to one of claims 10 to 14, wherein the main body (2) comprises an annular rim (36) protruding from the outer surface (302) of the main body (3), the rim (36) being configured for increasing the stiffness of the brake drum (2).

16. System for manufacturing (4) a friction ring (1) for a brake drum, preferably a composite brake drum, wherein the friction ring (1) forms an insert for overmolding by a foundry method of a metal, for example an aluminum alloy, the system comprising:
a punching device (40) configured for forming a protrusion (12) within a strip (10) of sheet metal, preferably a strip (10) of sheet steel, and
a rolling device (42) configured for conferring an axisymmetric annular shape on a strip (10) of sheet metal, preferably a strip (10) of sheet steel,
wherein the rolling device (42) comprises two support rollers (421, 422) and a cross roller (423) configured for scrolling the strip (10) and for progressively conferring the annular shape on the strip (10) as it scrolls,
wherein at least one among the two support rollers (421,422), preferably each of the two support rollers (421, 422), comprises a channel (4210) configured for housing the protrusion (12) during the scrolling of the strip (10).

17. System for manufacturing (4) a friction ring (1) according to claim 16, wherein the punching device (40) comprises:
a support (400) having an outer surface (4000) configured for being in contact with the strip (10) when said strip (10) is positioned on the support (400), a bore (4002) being made within the outer surface (4000) of the support (400), and
a stripper plate (402) having an inner surface (4020) configured for coming into contact with the strip (10) so as to press said strip (10) against the outer surface (4000) of the support (400), the stripper plate (402) also comprising a punch (4022), that is movable relative to the stripper plate (402) and able to protrude from the inner surface (4020) of the stripper plate (402), facing the bore (4002) of the support (400), so as to stamp the strip (10) to form the protrusion (12) there.

18. System for manufacturing (4) a friction ring (1) according to claim 16 or 17, wherein the channel (4210) is configured for crushing a peak of the protrusion (12) so as to confer on it a flared shape.

19. Manufacturing method (5) for a brake drum (1) comprising the steps consisting of:
forming a brake drum (2) main body (3) in an impression (5000) in an outer surface (500) of a first mold portion (50), and
moving, relative to the first mold portion (52), a second mold portion (52), comprising a support bearing a friction ring (520) according to any one of claims 1 to 9, so as to assemble the ring to the main body.

20. Method according to claim 19, wherein an installation device (54) elastically deforms the friction ring (1) of the brake drum (2) so as to position said friction ring (1) on the friction ring support (520).

21. Method (EE) for manufacturing a friction ring (1) for a brake drum (2), preferably for a composite brake drum, wherein the friction ring (1) forms an insert for overmolding by a foundry method of an aluminum alloy, the manufacturing method (EE) of a friction ring comprising the steps of:
punching (EE1) a strip (10) of sheet metal, preferably a strip (10) of sheet steel, so as to form a protrusion there, and
rolling (EE2) the strip (10) of sheet metal so as to confer on it an annular shape.

22. Method (EE) for manufacturing a friction ring (1) according to claim 21, wherein punching (EE1) is implemented before rolling (EE2).

23. Method (EE) for manufacturing a friction ring (1) according to one of claims 21 and 22, wherein, during punching (EE1), the strip (10) is positioned between an outer surface (4000) of a support (400) and an inner surface (4020) of a stripper plate (402) comprising a punch (4022), the punch (4022) then being set in motion toward the outer surface (4000) of the support (400) so as to stamp the strip (10) to form there a protrusion (12) which then extends within a bore (4002) made in the outer surface (4000) of the support (400).

24. Method (EE) for manufacturing a friction ring (1) according to one of claims 21 to 23, comprising, during rolling (EE2), the scrolling of the strip (10) by the rotation of two support rollers (421, 422) and of a cross roller (423).

25. Method (EE) for manufacturing a friction ring (1) according to claim 24, comprising, during scrolling, the deformation of the strip (10) so as to confer on it an axisymmetrical annular shape.

26. Method (EE) for manufacturing a friction ring (1) according to one of claims 21 to 25, comprising, during rolling (EE2), the crushing of a peak of the protrusion (12), so as to confer on it a flared shape.

27. Method (EE) for manufacturing a friction ring (1) according to one of claims 21 to 26, comprising, after rolling (EE2), a step of welding the ends (104, 106) of the strip (10).

28. Method (FF) for manufacturing a brake drum (2), comprising the steps of:
manufacturing (FF1) a friction ring (1) according to the manufacturing method (EE) for a friction ring (1) of one of claims 21 to 27, and
overmolding (FF2) a main body (3) of metal alloy, preferably of aluminum alloy, around the friction ring (1) so as to embed the protrusion (12) of the strip (10).

29. Method (FF) for manufacturing a brake drum (2) according to claim 28, comprising, after manufacture (FF1) of the friction ring (1), the elastic deformation of the friction ring (1) for the purpose of positioning said friction ring (1) on a friction ring support (520).

30. Method (FF) for manufacturing a brake drum (2) according to one of claims 28 and 29, also comprising a step of machining the friction ring (1) and/or the main body (3).
